# EUROPEAN PATENT APPLICATION

(11) **EP 4 502 793 A1**
(43) Date of publication of application: **05.02.2025**
(21) Application number: 23854305.2
(22) Date of filing: 09.08.2023
(51) Int. Cl.: G06F 9/451

(54) **IMAGE ACQUISITION METHOD AND ELECTRONIC DEVICE**

(30) Priority: 18.08.2022 CN 202210993651
(71) Applicant: Huawei Technologies Co., Ltd., Shenzhen, Guangdong 518129 (CN)
(72) Inventor: GU, Dehe, Shenzhen, Guangdong 518129 (CN); XIANG, Hengliang, Shenzhen, Guangdong 518129 (CN); PAN, Qiangbiao, Shenzhen, Guangdong 518129 (CN); NING, Zuobin, Shenzhen, Guangdong 518129 (CN); LUO, Jiahao, Shenzhen, Guangdong 518129 (CN)
(74) Representative: MERH-IP Matias Erny Reichl Hoffmann Patentanwälte PartG mbB
(86) International application number: PCT/CN2023/111995
(87) International publication number: WO 2024/037402

(57) **Abstract**

This application provides an image obtaining method and an electronic device. The method is applied to a first device, and the method includes: generating a thumbnail of an original image and a preview image of the original image based on information about the original image, where a size of the thumbnail is a first size, a size of the preview image is a second size, the first size is less than the second size, and the thumbnail and the preview image are stored in a same module; when an application requests to access a target image of the original image, generating the target image based on a relationship between a target size of the target image and the first size and/or the second size; and displaying the target image. According to the solution provided in this application, a waste of time resources and space resources can be reduced, and user experience of different applications in a same system can be unified.

## Description

This application claims priority to Chinese Patent Application No. 202210993651.X, filed with the China National Intellectual Property Administration on August 18, 2022, and entitled "IMAGE OBTAINING METHOD AND ELECTRONIC DEVICE", which is incorporated herein by reference in its entirety.

### TECHNICAL FIELD

Embodiments of this application relate to the image processing field, and in particular, to an image obtaining method and an electronic device.

### BACKGROUND

With rapid development of internet technologies and terminal devices, increasingly more users obtain various media files such as images and videos by taking photos, recording videos, surfing the internet, chatting, and the like. Because the obtained images are generally large, the terminal device generates a thumbnail based on an original image, so that the user can browse the thumbnail conveniently. There are many limitations in an existing thumbnail obtaining manner.

### SUMMARY

This application provides an image obtaining method and an electronic device, to reduce a waste of time resources and space resources, and unify user experience of different applications in a same system.

According to a first aspect, an image obtaining method is provided. The method is applied to a first device, and the method includes: generating a thumbnail of an original image and a preview image of the original image based on information about the original image, where a size of the thumbnail is a first size, a size of the preview image is a second size, the first size is less than the second size, and the thumbnail and the preview image are stored in a same module; when an application requests to access a target image of the original image, generating the target image based on a relationship between a target size of the target image and the first size and/or the second size; and displaying the target image.

According to the solution provided in this application, the first device uniformly generates the thumbnail and the preview image of fixed storage sizes based on the information about the original image. When the target size of the target image that needs to be cached by the application is inconsistent with the size of the generated thumbnail and the size of the generated preview image, the target image that is of the target size and that is required by the application may be generated based on information about the existing thumbnail or preview image, so that requirements of different applications for caching images of different sizes can be met. Therefore, a problem that different applications request to store a plurality of thumbnail copies of different sizes based on different resolutions can be resolved, and a waste of space resources can be reduced. In addition, in the solution of this application, the target image that is of the target size and that is required by the application is generated based on information about an existing thumbnail or preview image. Compared with a method for temporarily generating a thumbnail or a preview image based on an application request in the conventional technology, the solution of this application can reduce a waste of time resources, and in particular, can meet a performance requirement of a user for quick browsing. This improves user experience. In addition, the generated thumbnail and the generated preview image in this application are stored in the same module. When the user browses a thumbnail or a preview image by using different applications in a same system, each application may obtain a corresponding thumbnail or preview image from the module, so that user experience in different applications in the same system can be unified.

With reference to the first aspect, in some possible implementations, the generating the target image based on a relationship between a target size of the target image and the first size and/or the second size includes: if the target size is less than or equal to the first size, zooming out the thumbnail to the target size to obtain the target image; if the target size is greater than the first size and less than the second size, zooming out the preview image to the target size to obtain the target image; or if the target size is greater than or equal to the second size, zooming in the preview image to the target size to obtain the target image.

According to the solution provided in this embodiment of this application, when the target size is less than or equal to the first size, the thumbnail may be zoomed out to the target size to obtain the target image; when the target size is greater than the first size and less than the second size, the preview image may be zoomed out to the target size to obtain the target image; or when the target size is greater than or equal to the second size, the preview image may be zoomed in to the target size to obtain the target image. The target image of the target size is generated based on the information about the existing thumbnail or preview image, so that cache requirements of different applications for images of different sizes can be met, the problem that different applications request to store a plurality of thumbnail copies of different sizes based on different resolutions can be resolved, and a waste of space resources is reduced. In addition, the relationship between the target size and the first size and/or the second size is obtained through comparison, so that an appropriate image may be selected and zoomed in or zoomed out to obtain the target image, to improve quality of the target image.

With reference to the first aspect, in some possible implementations, pixels of the thumbnail are a part of pixels of the preview image, and the method further includes: encoding information about the pixels of the thumbnail, and storing encoded information in a first byte range; and encoding information about a pixel other than the pixels of the thumbnail in the preview image, and storing encoded information in a second byte range, where a first byte of the second byte range is adjacent to a last byte of the first byte range.

According to the solution provided in this embodiment of this application, an encoder in the first device separately encodes the information about the pixels of the thumbnail and the information about the pixel other than the pixels of the thumbnail in the preview image, stores, in the first byte range, the encoded information obtained by encoding the information about the pixels of the thumbnail, and stores, in the second byte range, the encoded information obtained by encoding the information about the pixel other than the pixels of the thumbnail in the preview image, where the first byte of the second byte range is adjacent to the last byte of the first byte range. Such an encoding manner helps the application obtain a corresponding image. In other words, when the user needs to obtain a thumbnail, the application may directly read encoded information about the thumbnail and decode the encoded information, to obtain the corresponding thumbnail; and when the user needs to obtain a preview image, the application may read encoded information and supplemental encoded information (the supplemental encoded information is information obtained by encoding information about a pixel other than pixels of a thumbnail in the preview image) about the thumbnail, and decode the encoded information and the supplemental encoded information, to obtain the corresponding preview image.

With reference to the first aspect, in some possible implementations, the method further includes: determining whether the original image is an image to be accessed by the user; and the generating a thumbnail of an original image and a preview image of the original image based on information about the original image includes: generating the thumbnail of the original image and the preview image of the original image based on the information about the original image when it is determined that the original image is the image to be accessed by the user.

According to the solution provided in this embodiment of this application, if it is determined that the original image is the image to be accessed by the user, the thumbnail and the preview image of the original image are generated based on the information about the original image. In this way, a thumbnail and a preview image that may be required by the user may be generated in advance, and a thumbnail module can immediately return the corresponding thumbnail and thumbnail when the user requests for the thumbnail and the preview image. Compared with the method for temporarily generating a thumbnail and a preview image based on an application request in the conventional technology, the solution of this application can reduce the waste of time resources, and in particular, can meet the performance requirement of the user for quick browsing. This improves user experience.

With reference to the first aspect, in some possible implementations, the generating the thumbnail of the original image and the preview image of the original image based on the information about the original image when it is determined that the original image is the image to be accessed by the user includes:
when it is determined that the original image is the image to be accessed by the user, obtaining a generation request based on a request message, and generating the thumbnail of the original image and the preview image of the original image based on the generation request and the information about the original image; or
when it is determined that the original image is the image to be accessed by the user, and it is checked, based on a preset period, that a generation request exists in a request list, generating the thumbnail of the original image and the preview image of the original image based on the generation request and the information about the original image.

With reference to the first aspect, in some possible implementations, the method further includes: determining whether the first device is in an idle state; and the generating a thumbnail of an original image and a preview image of the original image based on information about the original image includes: generating the thumbnail of the original image and the preview image of the original image based on the information about the original image when it is determined that the first device is in the idle state.

According to the solution provided in this embodiment of this application, if it is determined that the first device is in the idle state, the thumbnail of the original image and the preview image of the original image may be generated based on the information about the original image. In this way, the thumbnail that may be required by the user can be generated, and the thumbnail module can immediately return the corresponding thumbnail and preview image when the user requests for the thumbnail and the preview image. Compared with the method for temporarily generating a thumbnail and a preview image based on an application request in the conventional technology, the solution of this application can reduce the waste of time resources, and in particular, can meet the performance requirement of the user for quick browsing. This improves user experience.

With reference to the first aspect, in some possible implementations, the method further includes: when the first device browses a first media file in a second device and the first device does not have a thumbnail corresponding to the first media file, synchronizing the thumbnail corresponding to the first media file to the first device, where the thumbnail corresponding to the first media file includes an image of a current page displayed by the second device when the first device browses the second device, images of N1 pages before the current page, and images of N2 pages after the current page; and N1 and N2 are integers greater than or equal to 1.

According to the solution provided in this embodiment of this application, when the first device browses the first media file in the second device and the first device does not have the thumbnail corresponding to the first media file, the first device may synchronize the thumbnail corresponding to the first media file to the first device. Because the thumbnail corresponding to the first media file includes the image of the current page displayed by the second device when the first device browses the second device, the images of N1 pages before the current page, and the images of N2 pages after the current page, when the user actually browses an image before the current page or an image after the current page in the second device, the first device may immediately present a corresponding thumbnail. In this way, waiting time of the user during browsing of a distributed thumbnail can be reduced, and in particular, in a scenario in which the user quickly slides, performance of obtaining the distributed thumbnail by the application can be improved. In addition, a blank page is avoided in the scenario in which the user quickly slides.

With reference to the first aspect, in some possible implementations, the method further includes: when the first device browses a second media file in the second device and the first device does not have a preview image corresponding to the second media file, synchronizing the preview image corresponding to the second media file to the first device, where the preview image corresponding to the second media file includes an image of a current page displayed by the second device when the first device browses the second device, images of N3 pages before the current page, and images of N4 pages after the current page; and N3 and N4 are integers greater than or equal to 1.

According to the solution provided in this embodiment of this application, when the first device browses the first media file in the second device and the first device does not have the preview image corresponding to the first media file, the first device may synchronize the preview image corresponding to the first media file to the first device. Because the preview image corresponding to the first media file includes the image of the current page displayed by the second device when the first device browses the second device, the images of N3 pages before the current page, and the images of N4 pages after the current page, when the user actually browses an image before the current page or an image after the current page in the second device, the first device may immediately present the corresponding preview image. In this way, waiting time of the user during browsing of a distributed preview image can be reduced, and in particular, in the scenario in which the user quickly slides, performance of obtaining the distributed preview image by the application can be improved. In addition, the blank page is avoided in the scenario in which the user quickly slides.

With reference to the first aspect, in some possible implementations, the method further includes: determining, based on a predicted user gesture, a third media file that is in the second device and that is to be accessed by the user; and pre-synchronizing a thumbnail of the third media file or a preview image of the third media file.

According to the solution provided in embodiments of this application, the first device determines, based on the predicted user gesture, the third media file that is in the second device and that is to be accessed by the user, and pre-synchronizes the thumbnail of the third media file or the preview image of the third media file. When the user actually accesses a distributed image, the first device may immediately present a corresponding thumbnail or preview image. In this way, waiting time of the user during browsing of the distributed image can be reduced, and in particular, in the scenario in which the user quickly slides, performance of obtaining the distributed image by the application can be improved. In addition, the blank page is avoided in the scenario in which the user quickly slides.

With reference to the first aspect, in some possible implementations, the determining, based on a predicted user gesture, a third media file that is in the second device and that is to be accessed by the user includes: if the predicted user gesture is sliding upward, determining that the third media file includes images of M1 pages after an image of a current page displayed by the second electronic device; if the predicted user gesture is sliding downward, determining that the third media file includes images of M2 pages before the image of the current page displayed by the second electronic device; if the predicted user gesture is sliding leftward, determining that the third media file includes images of M3 pages after the image of the current page displayed by the second electronic device; or if the predicted user gesture is sliding rightward, determining that the third media file includes images of M4 pages before the image of the current page displayed by the second electronic device, where M1, M2, M3, and M4 are integers greater than or equal to 1.

With reference to the first aspect, in some possible implementations, the method further includes: determining whether the first device is in the idle state; and when it is determined that the first device is in the idle state, and a quantity of local preview images in the first device is greater than a first threshold, clearing the local preview images, where the local preview image is a preview image generated by the first device based on the information about the original image stored in the first device.

According to the solution provided in embodiments of this application, when the first device identifies that the first device is in the idle state and the quantity of local preview images in the first device is greater than the first threshold, the first device may clear the local preview image that is not required by the user, to achieve an objective of clearing storage space and to reduce a waste of storage space. This improves utilization of a storage device of the user.

With reference to the first aspect, in some possible implementations, the clearing the local preview image includes:
sorting the local preview images based on time of accessing the local preview images by the user, and clearing the quantity of local preview images to a first specified value based on a sorting result; or sorting the local preview images based on a quantity of times of accessing the local preview images by the user, and clearing the quantity of local preview images to the first specified value based on a sorting result.

According to the solution provided in embodiments of this application, the local preview images are sorted based on the time of accessing the local preview images by the user, or the local preview images are sorted based on the quantity of times of accessing the local preview images by the user, and the quantity of local preview images is cleared to the first specified value based on the sorting result. This ensures that the local preview images are cleared in an orderly manner.

With reference to the first aspect, in some possible implementations, the method further includes: clearing a distributed preview image in the first device, where the distributed preview image is a preview image obtained by the first device from the second device, or a preview image generated by the first device based on an original image read from the second device.

According to the solution provided in embodiments of this application, when the first device identifies that the first device is in the idle state, the first device may clear the distributed preview image that is not required by the user, to achieve the objective of clearing storage space and to reduce the waste of storage space. This improves the utilization of the storage device of the user.

With reference to the first aspect, in some possible implementations, the clearing a distributed preview image in the first device includes: determining a value of duration in which the second device is disconnected from the first device and a value of preset duration, where the disconnection duration is disconnection duration between two adjacent connections between the second device and the first device; and if the disconnection duration is greater than the preset duration, clearing all distributed preview images in the first device; or if the disconnection duration is less than or equal to the preset duration, and a quantity of distributed preview images is greater than a second threshold, clearing a part of the distributed preview images in the first device.

According to the solution provided in embodiments of this application, the value of the disconnection duration between the second device and the first device and the value of the preset duration are determined, so that all the distributed preview images or some distributed preview images in the first device are cleared. In this application, whether to clear all the distributed preview images or some distributed preview images is selected based on the value of the disconnection duration between devices and the value of the preset duration. Therefore, a requirement of browsing the distributed preview image by the user can be further met as much as possible while the objective of clearing storage space is achieved.

With reference to the first aspect, in some possible implementations, the clearing a part of the distributed preview images in the first device includes: sorting the distributed preview images based on time of accessing the distributed preview images by the user, and clearing the quantity of distributed preview images to a second specified value based on a sorting result; or sorting the distributed preview images based on a quantity of times of accessing the distributed preview images by the user, and clearing the quantity of distributed preview images to the second specified value based on a sorting result.

According to the solution provided in embodiments of this application, the distributed preview images are sorted based on the time of accessing the distributed preview images by the user, or the distributed preview images are sorted based on the quantity of times of accessing the distributed preview images by the user, and the quantity of distributed preview images is cleared to the second specified value based on the sorting result. This ensures that the distributed preview images are cleared in an orderly manner.

According to a second aspect, an apparatus is provided. The apparatus is included in an electronic device, and the apparatus has a function of implementing behavior of the electronic device in the foregoing aspects and the possible implementations of the foregoing aspects. The function may be implemented by hardware, or may be implemented by hardware executing corresponding software. The hardware or the software includes one or more modules or units corresponding to the foregoing function,

According to a third aspect, an electronic device is provided, including one or more processors, a memory, one or more applications, and one or more computer programs. The one or more computer programs are stored in the memory, and the one or more computer programs include instructions. When the instructions are executed by the electronic device, the electronic device is enabled to perform the method in any possible implementation of the first aspect.

According to a fourth aspect, a chip system is provided, including at least one processor. When program instructions are executed in the at least one processor, a function of the method in any possible implementation of the first aspect is implemented on the electronic device.

According to a fifth aspect, a computer storage medium is provided, including computer instructions. When the computer instructions are run on an electronic device, the electronic device is enabled to perform the method in any possible implementation of the first aspect.

According to a sixth aspect, a computer program product is provided. When the computer program product runs on an electronic device, the electronic device is enabled to perform the method in any possible design of the first aspect.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3 is a diagram of obtaining a thumbnail by an application;
FIG. 4 is a diagram of a thumbnail obtaining architecture according to an embodiment of this application;
FIG. 5 is a diagram of storing a thumbnail according to an embodiment of this application;
FIG. 6 is a diagram of a foreground thumbnail pre-generation method according to an embodiment of this application;
FIG. 7 is a diagram of a background offline thumbnail generation method according to an embodiment of this application;
FIG. 8 is a diagram of encoding a thumbnail and a preview image according to an embodiment of this application;
FIG. 9 is a diagram of obtaining a thumbnail and a preview image based on a thumbnail file according to an embodiment of this application;
FIG. 10 is a diagram of obtaining a distributed thumbnail in a cross-device manner according to this application;
FIG. 11 is a diagram of distributed thumbnail pre-synchronization according to an embodiment of this application;
FIG. 12(a) to FIG. 12(e) are a diagram of distributed thumbnail pre-synchronization according to another embodiment of this application;
FIG. 13(a) to FIG. 13(f) are a diagram of distributed preview image pre-synchronization according to an embodiment of this application;
FIG. 14 is a diagram of a distributed thumbnail pre-synchronization method according to an embodiment of this application;
FIG. 15 is a diagram of a local preview image clearing method according to an embodiment of this application;
FIG. 16 is a diagram of a preview image clearing method according to an embodiment of this application;
FIG. 17 is a diagram of an image obtaining method according to an embodiment of this application;
FIG. 18 is a block diagram of an electronic device according to an embodiment of this application; and
FIG. 19 is a block diagram of another electronic device according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features.

A solution provided in embodiments of this application may be applied to an electronic device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

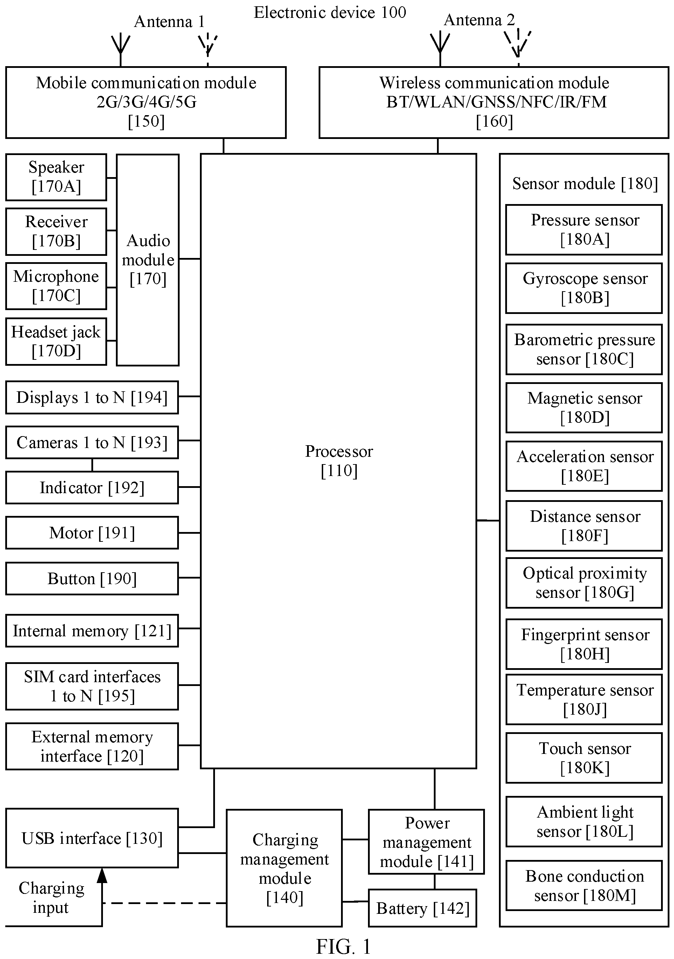

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from a charger. The charger may be a wireless charger, or may be a wired charger.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may also be multiplexed to improve antenna utilization.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video by using the display 194.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function through the GPU, the display 194, the application processor, and the like. The GPU is a microprocessor for image processing, and is connected to the display 194 and the application processor. The display 194 is configured to display an image, a video, or the like.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The external memory interface 120 may be configured to connect to an external memory card, for example, a micro SD card, to expand a storage capability of the electronic device 100. The external memory card communicates with the processor 110 through the external memory interface 120, to implement a data storage function, for example, store files such as music and a video in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash storage device, or a universal flash storage (universal flash storage, UFS).

The electronic device 100 may implement audio functions such as music playing and recording by using the audio module 170, the speaker 170A, the receiver 170B, the microphone 170C, the headset jack 170D, the application processor, and the like.

A software system of the electronic device 100 may use a layered architecture, an event-driven architecture, a microkernel architecture, a micro service architecture, or a cloud architecture. In embodiments of this application, an Android (android) system with a layered architecture is used as an example to describe a software structure of the electronic device 100.

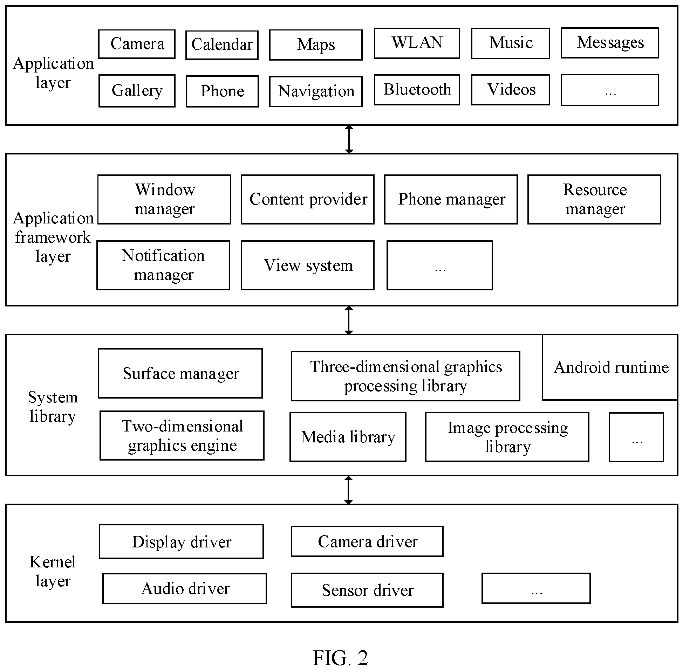

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, browsing history, a bookmark, an address book, and the like.

The view system includes visual controls like a control for displaying a text and a control for displaying an image. The view system may be configured to construct an application. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager provides, for the application, various resources like a localized character string, an icon, an image, a layout file, and a video file.

The notification manager enables the application to display notification information in the status bar, and may be configured to convey a notification type message, which may automatically disappear after a short stay without user interaction.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library may include a plurality of media files, and may support playback and recording of a plurality of commonly used audio and video formats, and static image files. The media library may support a plurality of audio and video encoding formats, for example, MPEG-4, H.264, the moving picture experts group audio layer 3 (moving picture experts group audio layer iii, MP3), the advanced audio coding (advanced audio coding, AAC), the adaptive multi-rate (adaptive multi-rate, AMR), the joint photographic experts group (joint photographic experts group, JPEG), and the portable network graphic (portable network graphic, PNG).

For ease of understanding the solution of this application, the following first describes background technologies related to this application with reference to the accompanying drawings.

With rapid development of internet technologies and terminal devices, increasingly more users obtain various media files such as images and videos by taking photos, recording videos, surfing the internet, chatting, and the like. Because the obtained images are generally large, the terminal device generates a thumbnail based on an original image, so that the user can browse the thumbnail conveniently.

Currently, a thumbnail obtaining manner is as follows: An operating system provides a tool class for obtaining a thumbnail. For example, for an Android system, in a process of developing an application, a developer first obtains an index of a media file, and obtains a thumbnail through an interface based on the index, or obtains, based on the index, a file descriptor through an interface opened by a media provider (media provider), and uses the file descriptor as a parameter of a thumbnail tool class to temporarily generate a thumbnail. The application caches and destroys the thumbnail. However, in this thumbnail generation manner, the thumbnail is temporarily generated based on an application request, and the thumbnail generation process is time-consuming, resulting in a waste of time resources. In addition, in this thumbnail generation manner, the application caches the thumbnail, and for different applications, paths for caching the thumbnail are different. When a user browses a same thumbnail in different applications, different paths for caching the thumbnail in different applications cause different user experience, and bring a difference in user experience. In addition, when different applications cache a same media file, a plurality of same thumbnails exist, resulting in a waste of space resources.

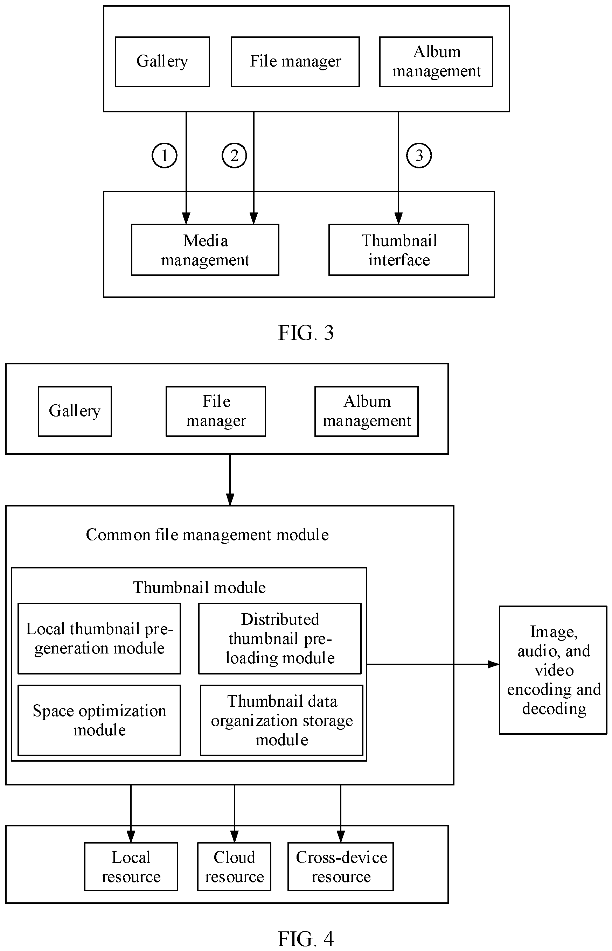

FIG. 3 is a diagram of obtaining a thumbnail by an application.

To obtain a thumbnail, a current application (for example, Gallery in FIG. 3) needs to obtain a local file and a uniform resource identifier (uniform resource identifier, URI) corresponding to an identifier (identifier, ID) to which the local file is mapped in a database, then open a file of a specified URI through a specific interface (for example, a media management interface, which is not shown in the figure), to obtain a file descriptor, and use the file descriptor as a parameter of a thumbnail tool class to temporarily generate the thumbnail through a thumbnail interface. However, in this thumbnail generation manner, the thumbnail is temporarily generated based on an application request, and a thumbnail generation process is time-consuming, resulting in a waste of time resources. In addition, in this thumbnail generation manner, only a specific URI is supported, and two interfaces (namely, the media management interface and the thumbnail interface) need to be used in the thumbnail obtaining method. For a distributed URI and a network URI, more additional interfaces are even required, which is difficult for a developer. In addition, in this thumbnail generation manner, the application caches the thumbnail, and different applications cache the thumbnail in different paths. For example, for a same image, WeChat^{®} caches a thumbnail of the image in a random access memory (random access memory, RAM), and Weibo^{®} caches the thumbnail of the image in a read-only memory (read-only memory, ROM). When a user browses the same image in WeChat^{®} and Weibo^{®}, because paths for caching the thumbnail of the image are different, different user experience is caused and a difference is brought to user experience. In addition, when WeChat^{®} and Weibo^{®} cache the same image, two same thumbnails exist, causing a waste of space resources.

Another thumbnail obtaining method is as follows: The developer develops or introduces a thumbnail loading and caching mechanism, and integrates the thumbnail loading and caching mechanism into an application developed by the developer. When using the application subsequently, the user can obtain the thumbnail by using the thumbnail loading and caching mechanism. For example, the developer develops or introduces the thumbnail loading and caching mechanism to automatically cache the thumbnail to a memory or disk, and the user can obtain the thumbnail from the memory or disk. However, for each application, the developer needs to develop a corresponding thumbnail loading and caching mechanism. In other words, each application needs to be independently integrated with the thumbnail loading and caching mechanism. There is no thumbnail loading and caching mechanism applicable to global applications. In other words, no thumbnail loading and caching mechanism can take effect for global applications of a system. This also brings differentiated user experience of different applications in a same system.

This application provides a unified thumbnail obtaining architecture, to sink and integrate a thumbnail capability into a system capability. This is applicable to all applications, and capabilities of obtaining a thumbnail by all applications are consistent. FIG. 4 is a diagram of a thumbnail obtaining architecture according to an embodiment of this application. A resource in a common file management module may include a local resource, a cloud resource, a cross-device resource, and the like. A thumbnail module may generate a thumbnail based on a resource file stored in a sandbox of the common file management module, and uniformly manage the generated thumbnail. The thumbnail module may include four modules: a local thumbnail pre-generation module, a distributed thumbnail pre-loading module, a space optimization module, and a thumbnail data organization storage module.

An external representation form of this embodiment of this application is that an application can directly obtain a corresponding thumbnail through a unified thumbnail obtaining interface provided by an operating system. In addition, the thumbnail obtaining interface supports a plurality of types of URIs, for example, a URI of a network media file (for example, an image on the internet), a URI of a sandbox of the application (for example, an image generated during a WeChat^{®} chat, which can be viewed only by WeChat^{®}, and cannot be viewed by another application), a URI of a common media file (the media file is stored in a specific directory, and the specific directory is managed by a common media), and a URI of a distributed common media file (for example, a common media file of another device). In other words, for different media files that are mapped to different types of URIs in the common file management module, the application may obtain thumbnails corresponding to the different media files from the thumbnail module through one interface. This greatly improves user efficiency.

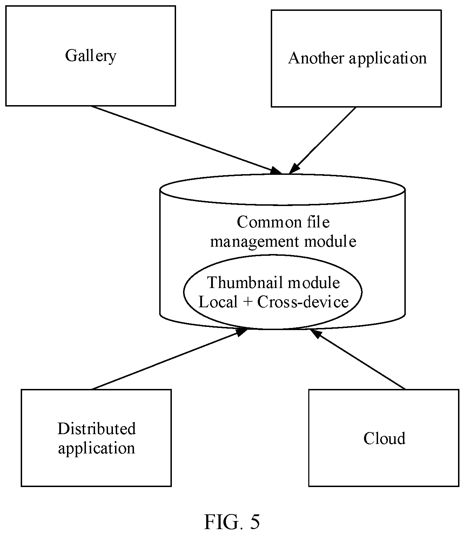

FIG. 5 is a diagram of storing a thumbnail according to an embodiment of this application. Media files generated by all applications are stored in the sandbox of the common file management module. The thumbnail module may generate thumbnails based on the media files stored in the sandbox of the common file management module, and uniformly manage the generated thumbnails. In addition, all the applications may include Gallery, another application (for example, a file manager, WeChat^{®}, and Weibo^{®}), a distributed application (which may be understood as a cross-device application), and a cloud (for example, Baidu ^{®} Cloud or Huawei Cloud). However, in the conventional technology, each application stores a thumbnail generated by the application. For example, Gallery stores a thumbnail generated by Gallery, and the file manager stores a thumbnail generated by the file manager.

In embodiments of this application, the application may directly obtain bitmap information (pixelmap) about the thumbnail by invoking a thumbnail obtaining interface. The bitmap information may be understood as an uncompressed bitmap format obtained by decoding an image. In addition, the user may not need to pay attention to a specific thumbnail generation process, and may control generation effect of the thumbnail by using a related parameter (for example, a width, a height, image quality, and brightness of the thumbnail).

It should be noted that embodiments of this application are not limited to a thumbnail obtaining interface of a single source, and may be extended to a thumbnail obtaining interface of a batch of sources. For example, the application may obtain thumbnails of a plurality of URIs at a time, to improve convenience of obtaining the thumbnails by the user. The plurality of URIs may be the same. For example, the plurality of URIs may be all local URIs, network URIs, distributed URIs, or the like. The plurality of URIs may alternatively be different. For example, the plurality of URIs may include all or some of a local URI, a network URI, a distributed URI, and the like. This is not specifically limited in this application.

According to the solution provided in this application, when media files corresponding to thumbnails that need to be obtained by the application are mapped to different types of URIs in the common file management module, the unified thumbnail obtaining interface provided by the operating system may be used to transfer the plurality of different types of URIs, and the operating system may return the thumbnails required by the user. In other words, for different media files that are mapped to different types of URIs in the common file management module, the application may obtain thumbnails corresponding to the different media files from the thumbnail module through one interface. This greatly improves use efficiency for the user. In addition, for any media file, a thumbnail of the media file is stored globally and is uniformly managed by the thumbnail module, and the application does not need to separately store and manage the thumbnail. This can reduce a waste of space resources. When the user browses a thumbnail by using different applications in a same system, the application obtains the thumbnail from the thumbnail module, and user experience of different applications in the same system can be unified.

It is pointed out above that the thumbnail may be obtained by using the thumbnail obtaining tool class provided by the operating system. However, in this manner, the thumbnail is temporarily generated based on an application request, and a process of temporarily generating the thumbnail is time-consuming, and may reach hundreds of milliseconds. This cannot meet a performance requirement of the user for quick browsing. Therefore, embodiments of this application provide a new thumbnail generation policy, so that a thumbnail that may be required by a user can be generated in advance, and an operating system can immediately return the corresponding thumbnail when the user requests for the thumbnail.

The new thumbnail generation policy provided in embodiments of this application may include a foreground thumbnail pre-generation policy and a background offline thumbnail generation policy. The foreground thumbnail pre-generation policy is to pre-generate a corresponding thumbnail based on a media file generated when a user photographs a photo, browses a network, has a chat, performs sharing, or the like. The background offline thumbnail generation policy is to generate a thumbnail corresponding to a media file in a device offline when it is determined that the device is in an idle state. The following separately describes specific processes of foreground thumbnail pre-generation and background offline thumbnail generation with reference to the accompanying drawings.

### 1. Foreground thumbnail pre-generation

In this embodiment of this application, when a media file is generated, a thumbnail identification module in a local thumbnail pre-generation module may determine whether the current media file is a file to be accessed by a user, and if the current media file is the file to be accessed by the user, the thumbnail identification module adds a thumbnail generation request to a request list. A foreground online thumbnail generation module generates a corresponding thumbnail based on the thumbnail generation request in the request list. A thumbnail data organization storage module may store the generated thumbnail, so that the thumbnail module can immediately return the corresponding thumbnail when the user requests for the thumbnail.

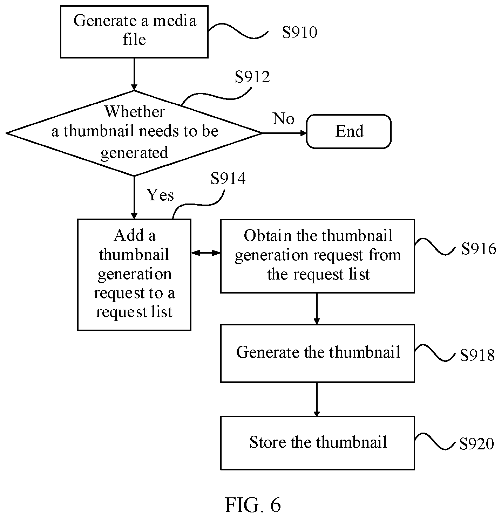

FIG. 6 is a diagram of a foreground thumbnail pre-generation method according to an embodiment of this application. The method may include steps S910 to S922.

S910: Generate a media file.

The media file in this embodiment of this application may include an image, a video, a document, and the like. The image may include an image photographed by a camera, an image downloaded from the internet, an image stored from another application (for example, WeChat^{®} or Weibo^{®}), and the like. This is not limited.

In this embodiment of this application, generation of the media file may be triggered in a plurality of manners. The image is used as an example. Generation of the image may be triggered when the user photographs an image by using a camera, generation of the image may be triggered when the user saves an image of chatting with a WeChat^{®} contact, generation of the image may be triggered when the user downloads an image from the internet, or the like.

S912: Whether a thumbnail needs to be generated.

If the thumbnail does not need to be generated, the process ends; or if the thumbnail needs to be generated, step S914 is performed.

In this embodiment of this application, the thumbnail identification module may identify whether a current media file is a file to be accessed by the user, to determine whether the thumbnail needs to be generated. If the thumbnail identification module identifies that the current media file is the file to be accessed by the user, it is determined that the thumbnail needs to be generated. If the thumbnail identification module identifies that the current media file is not the file to be accessed by the user, it is determined that the thumbnail does not need to be generated.

In this embodiment of this application, for media files generated by some applications, there is a high probability that the user immediately accesses the media files. Therefore, for the media files generated by these applications, the thumbnail identification module may identify these media files as files to be accessed by the user, for example, the image photographed by the camera or the image of chatting with the WeChat ^{®} contact.

Generally, after photographing an image by using the camera, the user may immediately view the photographed image. Therefore, after identifying that the user photographs the image by using the camera, the thumbnail identification module may determine that the currently photographed image is an image to be accessed by the user, and may determine that a corresponding thumbnail needs to be generated.

In addition, after saving the image of chatting with the WeChat^{®} contact, the user may immediately view the saved image. Therefore, after identifying that the user saves the image of chatting with the WeChat^{®} contact, the thumbnail identification module may determine that the currently saved image is an image to be accessed by the user, and may determine that a corresponding thumbnail needs to be generated.

S914: Add a thumbnail generation request to a request list.

S916: Obtain the thumbnail generation request from the request list.

S918: Generate the thumbnail.

S920: Store the thumbnail.

In this embodiment of this application, after determining that the thumbnail needs to be generated in step S912, the thumbnail identification module may add the thumbnail generation request to the request list, so that the foreground online thumbnail generation module generates the corresponding thumbnail based on the thumbnail generation request in the request list.

In this embodiment of this application, in step S916, there may be the following two occasions for the foreground online thumbnail generation module to obtain the thumbnail generation request from the request list.

### (1) Periodic check

The foreground online thumbnail generation module may periodically check whether the thumbnail generation request exists in the request list. If the thumbnail generation request exists in the request list, the foreground online thumbnail generation module may obtain the thumbnail generation request and generate the corresponding thumbnail based on the obtained thumbnail generation request. If the thumbnail generation request does not exist in the request list, the foreground online thumbnail generation module waits for a next period to obtain the thumbnail generation request.

For example, it is assumed that a period for the foreground online thumbnail generation module to check whether the thumbnail generation request exists in the request list is 100 ms. If the foreground online thumbnail generation module checks that there is a thumbnail generation request in the request list at 100^{th} ms, the foreground online thumbnail generation module obtains the thumbnail generation request from the request list, and generates the corresponding thumbnail based on the obtained thumbnail generation request. If the foreground online thumbnail generation module checks that no thumbnail generation request exists in the request list at 100^{th} ms, the foreground online thumbnail generation module may wait for a period to check again. In other words, the foreground online thumbnail generation module may check, at 200th ms, whether the thumbnail generation request exists in the request list, and execute a corresponding operation based on a check result.

It should be noted that the period 100 ms in this embodiment is merely an example for description, and may be set to another value, for example, 50 ms or 200 ms. This is not limited.

### (2) Received request message

After receiving a request message, the foreground online thumbnail generation module may obtain the thumbnail generation request and generate the corresponding thumbnail.

For example, when the thumbnail identification module identifies that the current media file is the file to be accessed by the user, the thumbnail identification module may send the request message to the foreground online thumbnail generation module when adding the thumbnail generation request to the request list, where the request message requests to generate the thumbnail of the media file. After the foreground online thumbnail generation module receives the request message, in response to receiving the request message, the foreground online thumbnail generation module may obtain the thumbnail generation request from the request list, and generate the corresponding thumbnail based on the thumbnail generation request.

In this embodiment of this application, each time the thumbnail identification module adds a thumbnail generation request to the request list, the thumbnail identification module may send a request message to the foreground online thumbnail generation module. The request message is mainly used to wake up the foreground online thumbnail generation module and remind the foreground online thumbnail generation module that there is a thumbnail generation request in the request list, so that the foreground online thumbnail generation module obtains the thumbnail generation request based on the request message and generates the corresponding thumbnail. It may be understood that, not every request message may have wake-up effect on the foreground online thumbnail generation module. If the foreground online thumbnail generation module wakes up after receiving a request message, the foreground online thumbnail generation module is in an awake state, and a subsequent received request message does not have wake-up effect on the foreground online thumbnail generation module, but only reminds the foreground online thumbnail generation module that there is a to-be-generated thumbnail.

It should be noted that the process of steps S916 to S920 may be referred to as a foreground independent thread. To facilitate understanding of the foreground independent thread, the following briefly describes a concept of "thread".

A "thread" is a minimum unit in which an operating system can perform computing and scheduling. The thread is included in a process and is an actual operating unit in the process. One process may have a plurality of threads, and the threads execute different tasks in parallel.

Because the threads execute different tasks in parallel, it may be understood that the tasks executed by the threads are independent of each other. In addition, when an application generates a media file and the thumbnail identification module identifies that the current media file is a file to be accessed by the user, a corresponding thumbnail may be immediately generated. In this case, the application is still in a running state. The thumbnail generation process in steps S916 to S920 may be referred to as the foreground independent thread. As shown in the foregoing example, after photographing the image by using the camera, the user may immediately view the photographed image. After the thumbnail identification module identifies that the user photographs the image by using the camera, the foreground online thumbnail generation module may immediately generate the thumbnail of the photographed image. In this case, the camera is still in a running state, and a task of generating the thumbnail by the foreground online thumbnail generation module is independent of another task in the system. Therefore, the task of generating, by the foreground online thumbnail generation module, the thumbnail of the image photographed by the camera may be referred to as the foreground independent thread.

### 2. Background offline thumbnail generation

An idle identification module in the local thumbnail pre-generation module may identify a device status. When identifying that the device is in an idle state, the background offline thumbnail generation module may generate a thumbnail of an image generated offline, sort to-be-generated thumbnails, and add corresponding thumbnail generation requests to the request list in sequence based on the sorting. The background offline thumbnail generation module generates corresponding thumbnails based on the thumbnail generation requests in the request list. When the idle identification module identifies that the device is in a non-idle state, all thumbnail generation tasks are terminated. In addition, in the solution in which the background offline thumbnail generation module is used to generate the thumbnail, a threshold may be set, and when a quantity of thumbnail generation requests exceeds the threshold, a current thumbnail generation task is ended.

The image generated offline in embodiments of this application may be an image downloaded by the user from Baidu NetDisk, an image generated by another application, an image newly generated by the user, or the like.

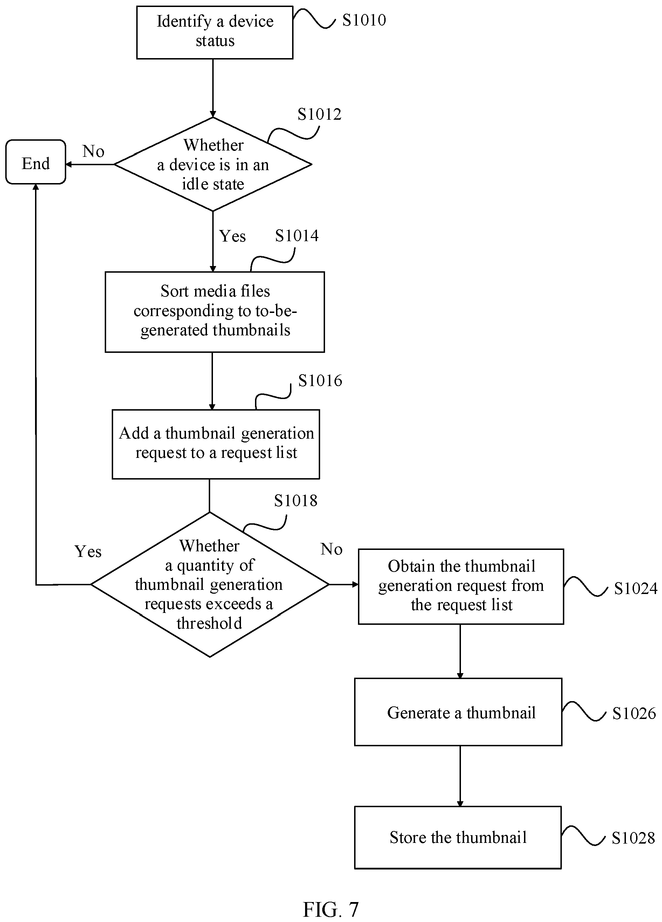

FIG. 7 is a diagram of a background offline thumbnail generation method according to an embodiment of this application. The method may include steps S1010 to S 1026.

S1010: Identify a device status.

S1012: Whether a device is in an idle state.

If the device is in the idle state, step S 1014 is performed; or if the device is not in the idle state, the process ends.

In this embodiment of this application, when an idle identification module identifies that the device is in the idle state, a background offline thumbnail generation module may generate a thumbnail of an image generated offline. For example, when the device is in a screen-off or charging state, the background offline thumbnail generation module may prepare to generate the thumbnail of the image generated offline. When the idle identification module identifies that the device is in a non-idle state (in some possible implementations, the non-idle state may also be referred to as a busy state), all thumbnail generation tasks may be ended, for example, when a user uses the device to play a game or chat, all the thumbnail generation tasks may be ended.

S 10 14: Sort media files corresponding to to-be-generated thumbnails.

In this embodiment of this application, when the idle identification module identifies that the device is in the idle state, the background offline thumbnail generation module may first sort the media files corresponding to the to-be-generated thumbnails, and sequentially generate corresponding thumbnails based on a sorting result. For example, the background offline thumbnail generation module may sort the media files based on creation time of the media files. When generating the thumbnails, the background offline thumbnail generation module may preferentially generate a thumbnail corresponding to a media file that has latest creation time.

For example, the media file is an image. It is assumed that images corresponding to the to-be-generated thumbnails include an image 1, an image 2, an image 3, an image 4, and an image 5, and creation time of the five images are respectively 08:00 on July 3, 2022, 15:00 on July 5, 2022, 10:00 on June 8, 2022, 11:00 on May 13, 2022, and 12:00 on July 10, 2022. In this case, the background offline thumbnail generation module may first sort the five images in descending order of creation time, that is, the image 5, the image 2, the image 1, the image 3, and the image 4. When the idle identification module identifies that the device is in the idle state, the background offline thumbnail generation module may sequentially generate thumbnails corresponding to the images in an order of the image 5, the image 2, the image 1, the image 3, and the image 4.

S1016: Add a thumbnail generation request to a request list.

In this embodiment of this application, when the idle identification module identifies that the device is in the idle state, the idle identification module may add the thumbnail generation request to the request list. When the idle identification module adds the thumbnail generation request to the request list, a quantity of thumbnail generation requests may be recorded.

For example, when the idle identification module adds a first thumbnail generation request to the request list, the first thumbnail generation request may be marked as a thumbnail generation request 1; when the idle identification module adds a second thumbnail generation request to the request list, the second thumbnail generation request may be marked as a thumbnail generation request 2, ..., and the rest can be deduced by analogy.

It should be noted that, when the idle identification module records the quantity of thumbnail generation requests, recording may be performed based on a quantity of existing thumbnails in a system. For example, it is assumed that 1000 thumbnails already exist in the system, when the idle identification module adds the first thumbnail generation request to the request list, the first thumbnail generation request may be marked as a thumbnail generation request 1001; when the idle identification module adds the second thumbnail generation request to the request list, the second thumbnail generation request may be marked as a thumbnail generation request 1002, ..., and the rest can be deduced by analogy.

S1018: Whether the quantity of thumbnail generation requests exceeds a threshold.

If the quantity of thumbnail generation requests exceeds the threshold, the process ends; or if the quantity of thumbnail generation requests does not exceed the threshold, step S1024 is performed.

For example, it is assumed that the threshold in step S1018 is 2000. If the quantity of thumbnail generation requests does not exceed the threshold 2000, the background offline thumbnail generation module may generate a corresponding thumbnail based on the thumbnail generation request; or if the quantity of thumbnail generation requests exceeds the threshold 2000, the background offline thumbnail generation module may end a current thumbnail generation task, that is, for a 2001^{th} thumbnail generation request and a subsequent thumbnail generation request, the background offline thumbnail generation module no longer generates corresponding thumbnails.

S1024: Obtain the thumbnail generation request from the request list.

S1026: Generate the thumbnail.

S1028: Store the thumbnail.

In this embodiment of this application, for a specific process of steps S1024 to S1028, refer to related descriptions of steps S916 to S918 in FIG. 6. A difference from FIG. 6 is that steps S1024 to S1026 are performed by the background offline thumbnail generation module, and other content is similar. Details are not described.

In addition, the "thread" is described in FIG. 6 above. Because the threads execute different tasks in parallel, that is, tasks executed by the threads are independent of each other. In addition, in this embodiment of this application, when the idle identification module identifies that the device is in the idle state, the background offline thumbnail generation module generates the thumbnail of the image generated offline. In this case, an application that generates the image is not in the running state. The process of steps S1024 to S1028 may be referred to as the background independent thread. As shown in the foregoing example, for the image that is downloaded by the user from Baidu NetDisk and whose thumbnail is not generated in time, when the device is in the screen-off or charging state, the thumbnail of this type of image may be generated. In this case, Baidu NetDisk is not in the running state, and the task of generating the thumbnail by the background offline thumbnail generation module is independent of another task in the system. Therefore, the task of generating, by the background offline thumbnail generation module, the thumbnail of the image generated offline may be referred to as the background independent thread.

In embodiments of this application, the "background independent thread" and the foregoing "foreground independent thread" may be two independent threads, or may be a foreground queue and a background queue in one independent thread. This is not limited.

In some embodiments, step S1014 may also be performed after step S1018, that is, after it is determined that the quantity of thumbnail generation requests does not exceed the threshold, the media files corresponding to the to-be-generated thumbnails are sorted. This is not limited.

For example, the threshold 2000 in step S1018 is still used as an example. It is assumed that the request list includes 1000 thumbnail generation requests. After obtaining the 1000 thumbnail generation requests, because the quantity 1000 of thumbnail generation requests is less than the threshold 2000, the background offline thumbnail generation module may sort media files corresponding to thumbnails that are requested to be generated by the 1000 thumbnail generation requests and generate the corresponding thumbnails based on the sorting. For a specific sorting process, refer to content in step S1014. Details are not described herein.

In the foregoing example, the thumbnail identification module, the idle identification module, the foreground online thumbnail generation module, the background offline thumbnail generation module, and the like may be submodules in the local thumbnail pre-generation module; or the thumbnail identification module, the idle identification module, the thumbnail generation module (including the foreground online thumbnail generation module and the background offline thumbnail generation module), and the like may be submodules in the local thumbnail pre-generation module. This is not limited.

According to the solution provided in this application, the foreground online thumbnail generation module generates the corresponding thumbnail when the thumbnail identification module identifies that the generated media file is the file to be accessed by the user, and the background offline thumbnail generation module generates, when the idle identification module identifies that the device is in the idle state, the thumbnail of the image that is generated offline. The thumbnail that may be required by the user may be generated in advance through a combination of the foreground online thumbnail generation and the background offline thumbnail generation, so that the thumbnail module can immediately return the corresponding thumbnail when the user requests for the thumbnail. Compared with a method for temporarily generating a thumbnail based on an application request in the conventional technology, the solution of this application can reduce a waste of time resources, and in particular, can meet a performance requirement of the user for quick browsing. This improves user experience.

It is pointed out above that the thumbnail is generated by using the thumbnail tool class provided by the operating system. In this method, the application controls caching of the thumbnail. When caching the thumbnail, the application caches the thumbnail of a size required by the application. When sizes of the thumbnail to be cached for different applications are different, the system caches a plurality of copies, wasting space resources.

In embodiments of this application, a unified thumbnail organization manner is used. The thumbnail module uniformly generates a thumbnail and a preview image of a fixed storage size. When a size of an image that needs to be buffered by an application is less than or equal to a size of the thumbnail, the thumbnail module may provide encoded information about the thumbnail, and the application decodes the encoded information about the thumbnail to obtain the thumbnail. Further, the application may further zoom out the obtained thumbnail to obtain an image of a required buffer size. When the size of the image that needs to be buffered by the application is greater than the size of the thumbnail, the thumbnail module may provide encoded information about the preview image, and the application decodes the encoded information about the preview image to obtain the preview image. Further, the application may zoom in or zoom out the obtained preview image to obtain the image of the required buffer size.

In embodiments of this application, a thumbnail corresponding to each original image may be obtained. In some possible implementations, a storage size of the thumbnail corresponding to each original image is fixed, for example, 32 KB. In addition, for an original image, in this application, a preview image of the original image may be further obtained based on an obtained thumbnail and supplemental pixel information. In some possible implementations, a storage size of the preview image corresponding to the original image may also be fixed, for example, 50 KB.

Specifically, the local thumbnail pre-generation module may extract corresponding pixel information from the original image based on a parameter of the to-be-generated thumbnail, and then obtain the thumbnail of the original image based on the extracted pixel information. For example, if a quantity of pixels of the to-be-generated thumbnail is 256*256, the local thumbnail pre-generation module may extract 256*256 pixels from the original image, and obtain the thumbnail of the original image based on information about the extracted 256*256 pixels.

In addition, based on the obtained thumbnail with 256*256 pixels and 1080*? proportional information, supplemental information related to the preview image may be further obtained. Generally, a quantity of pixels of the preview image is greater than a quantity of pixels of the thumbnail. In this embodiment of this application, it is assumed that the quantity of pixels of the preview image is 1080*720. In addition to the foregoing 256*256 pixels of the obtained thumbnail, the local thumbnail pre-generation module may further extract (1080-256)*(720-256)=824*464 pixels from the original image, and may obtain the preview image of the original image based on the extracted information about the 824*464 pixels and the extracted information about the 256*256 pixels when the thumbnail is generated.

In embodiments of this application, the pixels of the thumbnail are a part of the pixels of the preview image. When encoding the thumbnail and the preview image, an encoder may uniformly encode the thumbnail and the preview image. When the user needs to obtain the thumbnail, the application may directly read the encoded information about the thumbnail and decode the encoded information about the thumbnail, to obtain the corresponding thumbnail. When the user needs to obtain the preview image, the application may read the encoded information about the preview image and decode the encoded information about the preview image, to obtain the corresponding preview image.

To present a corresponding image based on a user requirement, an embodiment of this application provides a new encoding scheme. For details, refer to the following.

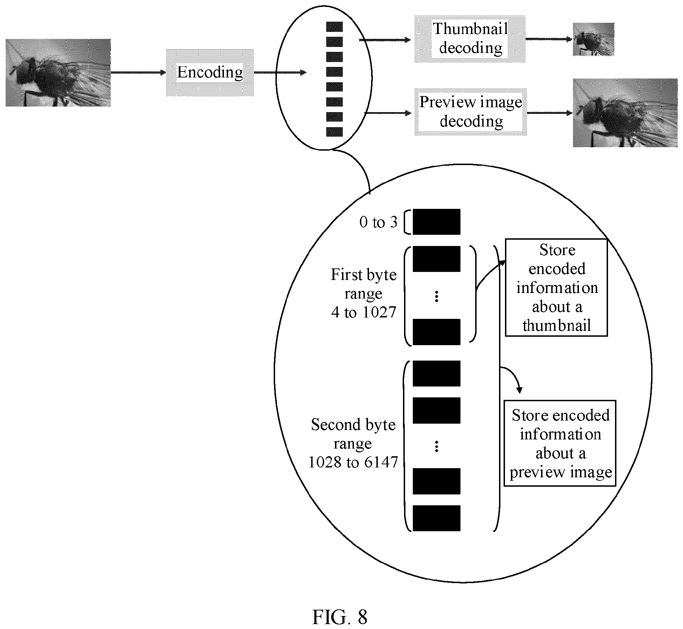

FIG. 8 is a diagram of encoding a thumbnail and a preview image according to an embodiment of this application. In embodiments of this application, because pixels of a thumbnail are a part of pixels of a preview image, when encoding the thumbnail and the preview image, an encoder may first encode information about the pixels of the thumbnail, then encode information about a pixel other than the pixels of the thumbnail in the preview image, and compress the encoded information into a same file. An image size of a thumbnail corresponding to the file is a fixed value.

For example, it is assumed that a resolution of an original image is 6480*4320, that is, a quantity of pixels of the original image is 6480*4320. A thumbnail encoding and decoding process is as follows: The encoder in a local thumbnail pre-generation module obtains 256*256 pixels from the original image, encodes information about the 256*256 pixels, and stores encoded information obtained through encoding in a database or a file, where the encoded information may be stored in a first byte range, a location shown in FIG. 8. It is assumed that bytes occupied by the encoded information about the thumbnail include 1024 bytes, so that the encoded information about the thumbnail may be stored starting from a fourth byte of a data frame. In this case, a first byte range for storing the encoded information about the thumbnail is from the fourth byte to a 1027^{th} byte (a 0^{th} byte to a third byte may store header information about the file and the like). After obtaining the encoded information, the decoder decodes the encoded information to obtain the thumbnail.

A preview image encoding and decoding process is as follows: It is assumed that the preview image includes 1080*720 pixels. In addition to the foregoing 256*256 pixels of the obtained thumbnail, the encoder in the local thumbnail pre-generation module may further extract (1080-256)*(720-256)=824*464 pixels from the original image, encode information about the extracted 824*464 pixels, and store supplemental encoded information (encoded information obtained by encoding the information about the extracted 824*464 pixels in this example may be referred to as supplemental encoded information) obtained through encoding in a second byte range. In addition, a first byte in the second byte range is adjacent to a last byte in the first byte range, for example, a location shown in FIG. 8. It is assumed that bytes occupied by the supplemental encoded information include 5120 bytes, so that the supplemental encoded information may be stored starting from a 1028^{th} byte of a data frame, and the second byte range for storing the supplemental encoded information is from the 1028^{th} byte to a 6147^{th} byte. The decoder obtains all encoded information, all the encoded information may include the encoded information about the 256*256 pixels of the thumbnail in the foregoing example and the supplemental encoded information about the subsequently extracted 824*464 pixels. The decoder may decode all the encoded information to obtain the preview image.

The foregoing example describes that generally, the quantity of pixels of the preview image of the original image is greater than the quantity of pixels of the thumbnail of the original image. To prevent a file size of the preview image from being excessively large, an upper limit may be further set for the quantity of pixels of the preview image in embodiments of this application. For example, the quantity of pixels of the preview image may be set to be less than or equal to a threshold. It is assumed that the threshold is 1080*720, as shown in the foregoing example, the quantity of pixels of the thumbnail is 256*256, the quantity of pixels of the preview image may be: 256*256<quantity of pixels of the preview image≤1080*720.

It may be understood that the threshold 1080*720 shown in this embodiment of this application is merely an example for description. The threshold may alternatively be another value, and should not constitute a special limitation on this application. The threshold in embodiments of this application may be a fixed value, or may be a dynamically changing value. This is not limited.

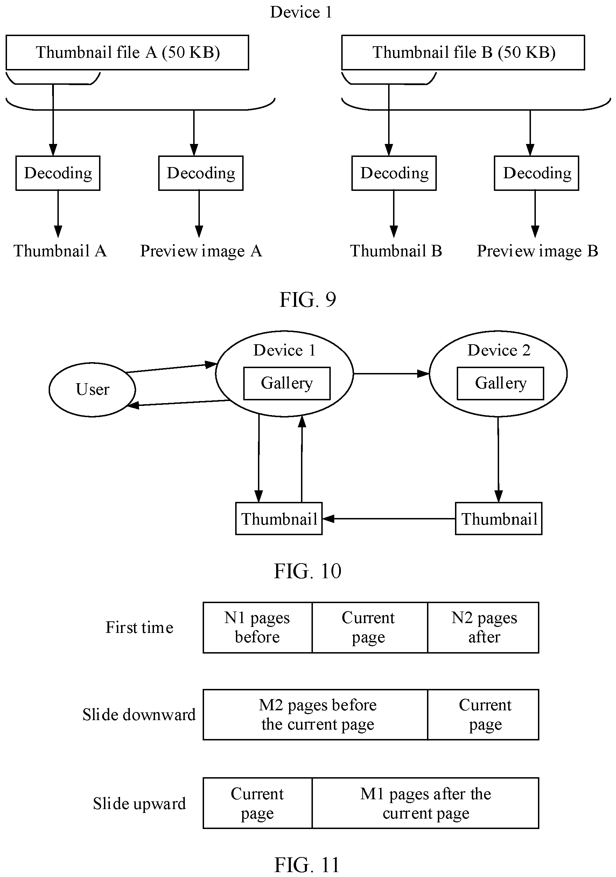

FIG. 9 is a diagram of obtaining a thumbnail and a preview image based on a thumbnail file according to an embodiment of this application. It can be learned from the figure that storage sizes of a thumbnail file A and a thumbnail file B are both 50 KB, that is, a storage size of a thumbnail file is fixed. Certainly, in some possible implementations, the storage size of the thumbnail file may not be limited to 50 KB.

It may be understood that the thumbnail file A includes a thumbnail A and a preview image A, and the thumbnail file B includes a thumbnail B and a preview image B.

For example, the thumbnail A and the preview image A are requested. When a user requests for the thumbnail A, a byte range for storing the thumbnail A may be located based on key information such as header information of the thumbnail file A, for example, a start address and a length of the file, and a related attribute of an image, and the thumbnail A may be directly obtained based on the located byte range. When the user requests for the preview image A, the preview image A may be obtained through fusion based on information about the thumbnail A and supplemental feature information (with reference to FIG. 8, the information about the thumbnail A herein may be understood as the information about the 256*256 pixels shown in the foregoing example, and the supplemental feature information may be understood as the information about the 824*464 pixels shown in the foregoing example).

It may be understood that, if a storage size of an original image is less than 50 KB, and if a thumbnail corresponding to the original image is generated by using the method shown in FIG. 8, a storage size of a thumbnail file is definitely less than 50 KB. In this case, when information about a pixel extracted from the original image is encoded, information about a blank pixel may be filled, so that a storage size of a finally generated thumbnail file is 50 KB.

It should be noted that 1080*? in the foregoing embodiment may be understood as that after the original image is zoomed out, a length is 1080, and a width is zoomed out in equal proportion to a width of the original image. Therefore, "?" indicates that this value is determined based on a zoom-out ratio of a length of the original image.

For example, it is assumed that a resolution of the original image is 6480*4320, and a length obtained by decreasing the length of the original image by six times is 1080. In this case, "?" is 6. Similarly, a width obtained by decreasing the width of the original image by six times is 720. Therefore, the resolution after the original image is zoomed out by six times is 1080*720.

It should be further noted, in embodiments of this application, not only the thumbnail with the resolution of 256*256 and the preview image with the resolution of 1080*? are supported, but also various variants of other sizes may be generated based on an existing resolution. For example, images with resolutions of 2160*1440, 720*680, 640*480, and the like may be obtained through specific zoom-in or zoom-out based on the obtained preview image.

For example, the resolution of the original image is 6480*4320 is still used as an example. The preview image with the resolution of 1080*720 is obtained by decreasing the length and the width of the original image by six times. Based on this, images with different resolutions may be obtained by zooming in or zooming out the preview image. For example, if both a length and a width of the preview image are increased by 2.0 times, an image with a resolution of 2160*1440 is obtained. If the length and the width of the preview image are decreased by 1.5 times and 1.06 times, an image with a resolution of 720*680 is obtained. If the length and the width of the preview image are decreased by 1.6875 times and 1.5 times, an image with a resolution of 640*480 is obtained.

In embodiments of this application, a supported image format is not limited to formats such as JPEG, PNG, a graphics interchange format (graphics interchange format, GIF), a high efficiency image file format (high efficiency image file format, HEIF), and a bitmap (bitmap, BMP) image.

In addition, the image in embodiments of this application is not limited to an image photographed by a camera, and a thumbnail of a video stream is also supported. Image information corresponding to a specified frame or a key frame may be obtained, to obtain a thumbnail corresponding to the specified frame or the key frame.

According to the solution provided in this application, the thumbnail module uniformly generates the thumbnail and the preview image of fixed storage sizes. When the size of the image that needs to be cached by the application is inconsistent with the size of the generated thumbnail and the size of the generated preview image, the image that is of the size and that is required by the application for caching may be generated based on information about an existing thumbnail or preview image, so that requirements of different applications for caching thumbnails of different sizes can be met. Therefore, a problem that different applications request to store a plurality of thumbnail copies of different sizes based on different resolutions can be resolved, and a waste of space resources can be reduced.

Based on this, the foregoing mainly describes generation, caching, and obtaining of a thumbnail in a local device. In some scenarios, obtaining of a distributed thumbnail is further involved. For example, in the HarmonyOS, a thumbnail of a peer device may be obtained by using a distributed gallery feature. FIG. 10 is a diagram of obtaining a distributed thumbnail in a cross-device manner according to this application.

Specifically, when a user browses a media file in a peer device (for example, a device 2 in FIG. 10) by using a local device (for example, a device 1 in FIG. 10), the local device first determines whether the local device caches a corresponding thumbnail. When the device 1 finds that the corresponding thumbnail is not cached in the device 1 (for example, when browsing a gallery of the device 2 for the first time), the device 1 triggers, by using a distributed capability, the gallery of the device 2 to synchronize a thumbnail of the device 2 to the device 1, for example, the device 1 may communicate with the device 2 in a Wi-Fi or Bluetooth manner, and synchronize the thumbnail of the device 2 to the device 1. After the device 1 receives the synchronized thumbnail, a gallery loads the synchronized thumbnail and presents the thumbnail to a user. However, this cross-device thumbnail obtaining manner is applicable only to a single application, and is not applicable to global applications in a system. In addition, when the user browses a media file in the device 2 by using the device 1, the device 1 synchronizes a corresponding thumbnail only when the device 1 finds that the corresponding thumbnail of the media file does not exist in the device 2. This solution has a high requirement on a network and a distributed transmission capability, therefore performance experience is poor in scenarios in which the user quickly slides.

Embodiments of this application provide a distributed thumbnail pre-synchronization solution. When previewing the media file in the peer device by using the local device, the user needs to request a distributed thumbnail corresponding to the media file in the peer device. When the local device finds that the local device does not have the distributed thumbnail of the media file, the local device may synchronize the distributed thumbnail of the media file to the local device. In a synchronization process, in addition to synchronizing the distributed thumbnail corresponding to the media file requested by the user, the local device may further predict, by determining a possible browsing direction of the user, a distributed thumbnail to be accessed by the user, and pre-synchronize the predicted distributed thumbnail to the local device, to accelerate access performance of the distributed thumbnail.

FIG. 11 is a diagram of distributed thumbnail pre-synchronization according to an embodiment of this application. When a local device browses a peer device for the first time and a page displayed on the peer device is a thumbnail of an original image, in addition to synchronizing the current page displayed on the peer device, the local device may pre-synchronize N1 pages before the current page and N2 pages after the current page of the peer device. When it is predicted that a hand of a user slides upward, M1 pages after the current page may be pre-synchronized to the local device in advance. Similarly, when it is predicted that the hand of the user slides downward, M2 pages before the current page may be pre-synchronized to the local device in advance. Herein, N1, N2, M1, and M2 are all integers greater than or equal to 1, where N1 and N2 may be equal or unequal, and M1 and M2 may be equal or unequal. This is not limited.

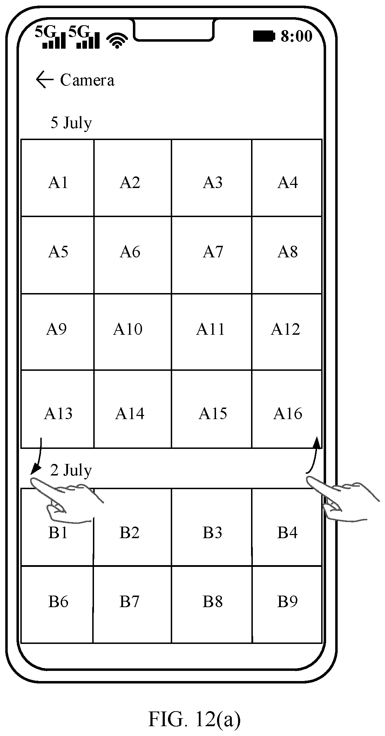

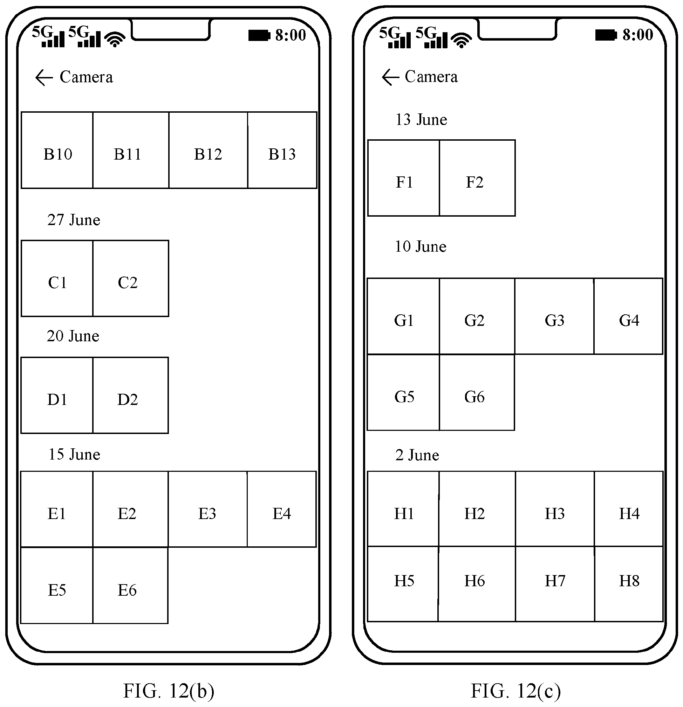

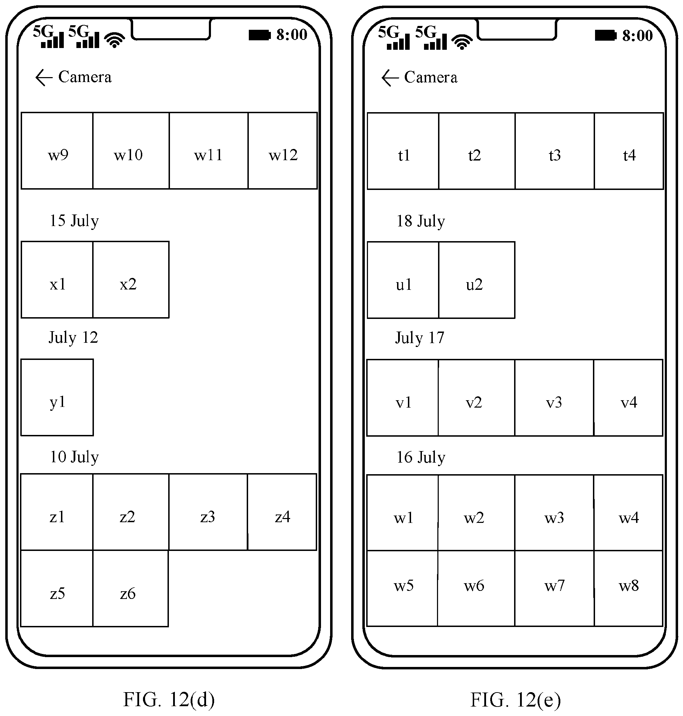

Gallery in a mobile phone is used as an example. FIG. 12(a) to FIG. 12(e) are a diagram of distributed thumbnail pre-synchronization according to another embodiment of this application. Herein, FIG. 12(a) is a current page displayed by the peer device browsed by the local device, FIG. 12(b) is a first page after the current page displayed by the peer device, FIG. 12(c) is a second page after the current page displayed by the peer device, FIG. 12(d) is a first page before the current page displayed by the peer device, and FIG. 12(e) is a second page before the current page displayed by the peer device.

In this embodiment, the first page after the current page in this application may be understood as follows: In a process in which the hand of the user slides upward, content at the bottom of the current page is adjacent to content at the top of the first page after the current page. Similarly, the first page before the current page in this application may be understood as follows: In a process in which the hand of the user slides downward, content at the top of the current page is adjacent to content at the bottom of the first page before the current page.

For example, N1=N2=1. When the local device (not shown in the figure) browses the peer device (that is, a mobile phone shown in FIG. 12(a)), if the peer device displays the page (that is, the current page) in FIG. 12(a), in addition to synchronizing the current page displayed by the mobile phone, the local device may further pre-synchronize the first page (like the page shown in FIG. 12(b)) before the current page and the first page (like the page shown in FIG. 12(d)) after the current page.

For example, M1=2. When it is predicted that the hand of the user slides upward, the local device may pre-synchronize two pages after the current page to the local device, that is, the local device may pre-synchronize the first page (like the page shown in FIG. 12(b)) after the current page and the second page (like the page shown in FIG. 12(c)) after the current page to the local device.

For example, M2=2. When it is predicted that the hand of the user slides downward, the local device may pre-synchronize two pages before the current page to the local device, that is, the local device may pre-synchronize the first page (like the page shown in FIG. 12(d)) before the current page and the second page (like the page shown in FIG. 12(e)) before the current page to the local device.

It may be understood that, in FIG. 12(a) to FIG. 12(e), images on the page synchronized by the local device from the peer device are thumbnails. In some embodiments, the local device may alternatively synchronize a preview image of the peer device to the local device. When the local device browses the peer device for the first time and a page displayed on the peer device is a preview image of an original image, in addition to synchronizing the current page displayed on the peer device, the local device may pre-synchronize N3 pages before the current page and N4 pages after the current page of the peer device. When it is predicted that the hand of the user slides leftward, M3 pages after the current page may be pre-synchronized to the local device in advance. When it is predicted that the hand of the user slides rightward, M4 pages before the current page may be pre-synchronized to the local device in advance. Herein, N3, N4, M3, and M4 are all integers greater than or equal to 1, where N3 and N4 may be equal or unequal, and M3 and M4 may be equal or unequal. This is not limited.

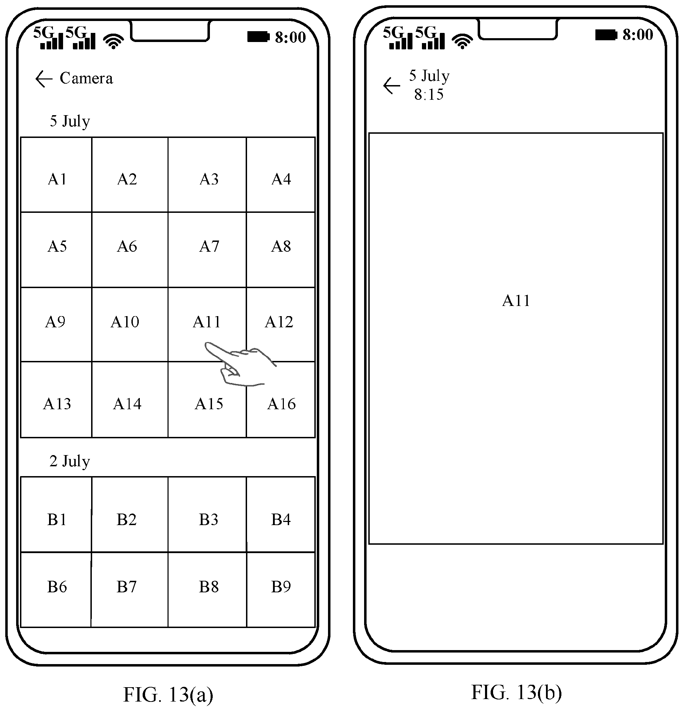

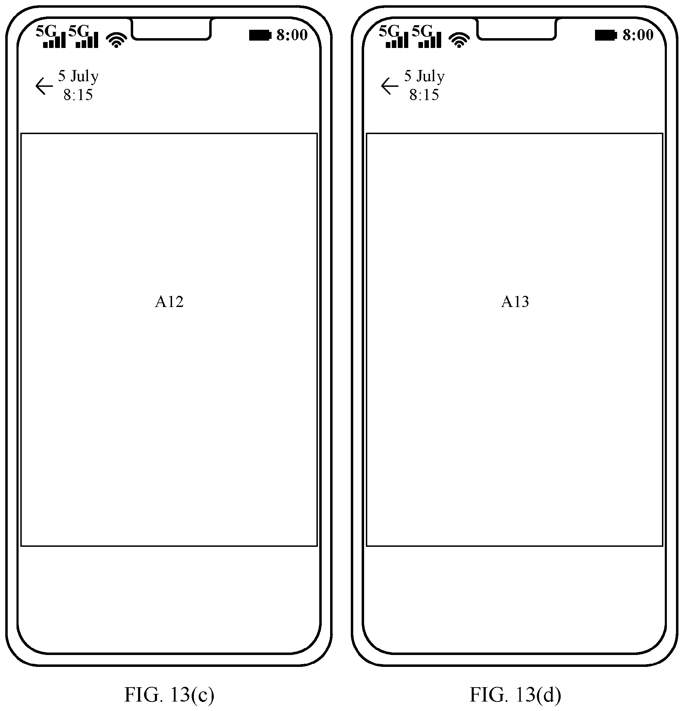

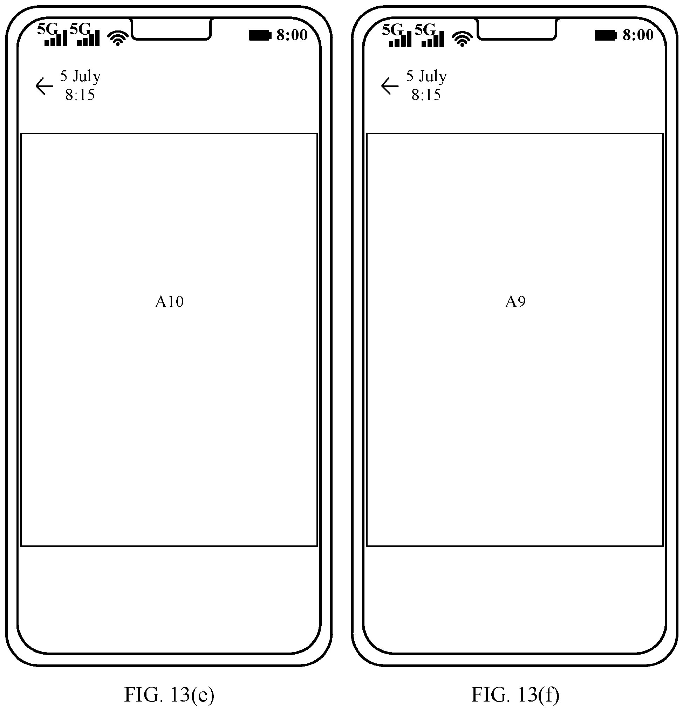

FIG. 13(a) to FIG. 13(f) are a diagram of distributed preview image pre-synchronization according to an embodiment of this application. Herein, FIG. 13(a) is a main interface of Gallery of a peer device, FIG. 13(b) is a preview image of an image A11 displayed in FIG. 13(a), and is denoted as a current page, and FIG. 13(c) is a first page after the current page, FIG. 13(d) is a second page after the current page, FIG. 13(e) is a first page before the current page, and FIG. 13(f) is a second page before the current page.

In this embodiment, the first page after the current page in this application may be understood as follows: In a process in which a hand of a user slides leftward, content on the right of the current page is adjacent to content on the left of the first page after the current page. Similarly, the first page before the current page in this application may be understood as follows: In a process in which the hand of the user slides rightward, content on the left of the current page is adjacent to content on the right of the first page before the current page.

For example, N3=N4=1. When a local device (not shown in the figure) accesses the peer device (that is, a mobile phone shown in FIG. 13(a)), if the peer device displays the page (that is, the current page) in FIG. 13(b), in addition to synchronizing the current page displayed by the mobile phone, the local device may further synchronize one page (like the page shown in FIG. 13(e)) before the current page and one page (like the page shown in FIG. 13(c)) after the current page.

For example, M3=2. When it is predicted that the hand of the user slides leftward, the local device may pre-synchronize two pages after the current page to the local device, that is, the local device may pre-synchronize the first page (like the page shown in FIG. 13(c)) after the current page and the second page (like the page shown in FIG. 13(d)) after the current page to the local device.

For example, M4=2. When it is predicted that the hand of the user slides rightward, the local device may pre-synchronize two pages before the current page to the local device, that is, the local device may pre-synchronize the first page (like the page shown in FIG. 13(e)) before the current page and the second page (like the page shown in FIG. 13(f)) before the current page to the local device.

The foregoing embodiment describes a scenario in which the distributed image that needs to be pre-synchronized by the local device exists in the peer device. In some embodiments, the distributed image that needs to be synchronized by the local device may not exist in the peer device, resulting in a synchronization failure. For this case, a distributed image peer generation mechanism is introduced in embodiments of this application. When a distributed image that needs to be synchronized by a local device does not exist in a peer device, the distributed image may be synchronized in the following manners.

### Manner 1:

The peer device may generate, by reading information about an original image in the peer device, a thumbnail or a preview image corresponding to the original image, and store the generated thumbnail or preview image in a file or a non-relational database. The local device may synchronize, to the local device by using a distributed capability, the stored thumbnail or preview image.

FIG. 10 is used as an example. It is assumed that the device 1 is the local device, and the device 2 is the peer device. If a thumbnail or preview image that needs to be synchronized by the device 1 does not exist in the device 2, the device 2 may read an original image to generate a corresponding thumbnail or preview image, and store the thumbnail or preview image in a file or a non-relational database, and then the device 1 may synchronize, to the device 1 by using a distributed capability (for example, by using Bluetooth or Wi-Fi), the thumbnail or preview image stored in the file or the non-relational database.

### Manner 2:

The local device may directly read information about an original image from the peer device by using a distributed capability, and locally generate, based on the read information about the original image, a thumbnail or a preview image corresponding to the original image.

FIG. 10 is still used as an example. It is assumed that the device 1 is the local device, and the device 2 is the peer device. If a thumbnail or preview image that needs to be synchronized by the device 1 does not exist in the device 2, the device 1 may directly read information about an original image from the device 2 by using the distributed capability (for example, by using Bluetooth or Wi-Fi), and generate, based on the read information about the original image, a thumbnail or a preview image corresponding to the original image.

For the foregoing two manners, in manner 1, the local device reads thumbnail or preview image information corresponding to the original image from the peer device, and in manner 2, the local device reads information about the original image from the peer device. Compared with that of reading, by the local device, the information about the original image in manner 2, a speed of reading, by the local device, the information about the thumbnail or preview image in manner 1 is faster. Therefore, when the distributed image that needs to be synchronized by the local device does not exist in the peer device, the distributed image may be preferentially synchronized based on manner 1. The following describes the solutions in embodiments of this application with reference to the accompanying drawings by using distributed thumbnail synchronization as an example.

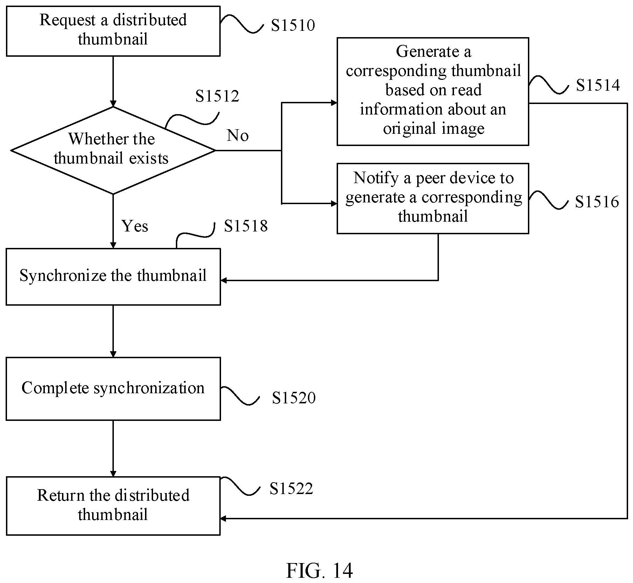

FIG. 14 is a diagram of a distributed thumbnail pre-synchronization method according to an embodiment of this application. The method may include steps S1510 to S1522.

S1510: Request a distributed thumbnail.

S1512: Whether the thumbnail exists.

If the thumbnail exists, step S1518 is performed; or if the thumbnail does not exist, step S1514 and/or S1516 are/is performed.

In the foregoing embodiment of this application, if the local device needs to synchronize the thumbnail on the peer device, the local device may send a request message to the peer device, where the request message requests the thumbnail on the peer device.

After the peer device receives the request message that is sent by the local device and that requests the thumbnail on the peer device, the peer device may first determine whether the thumbnail requested by the local device exists in the peer device. If the thumbnail requested by the local device exists in the peer device, the peer device may directly synchronize the thumbnail to the local device. If the thumbnail requested by the local device does not exist in the peer device, the peer device may first generate, based on information about an original image, a thumbnail corresponding to the original image, and store the generated thumbnail. The local device may synchronize the thumbnail stored in the peer device to the local device (for details, refer to the foregoing manner 1). Alternatively, the local device may read the information about the original image from the peer device by using a distributed capability, and locally generate, based on the read information about the original image, the thumbnail corresponding to the original image (for details, refer to the foregoing manner 2).

S1514: Generate the corresponding thumbnail based on the read information about the original image.

S1516: Notify the peer device to generate the corresponding thumbnail.

It may be understood that both step S1514 and step S1516 are performed by the local device. In step S1514, the local device reads the information about the original image from the peer device by using the distributed capability, and locally generates, based on the read information about the original image, the thumbnail corresponding to the original image. In step S1516, the local device may notify the peer device to generate the corresponding thumbnail, and synchronizes the thumbnail from the peer device to the local device after the peer device stores the generated thumbnail.

S1518: Synchronize the thumbnail.

S1520: Complete synchronization.

S1522: Return the distributed thumbnail.

In addition, this embodiment of this application is not limited to pre-synchronizing the distributed thumbnail when the user browses the distributed thumbnail, and pre-synchronizing the distributed thumbnail may also be customized according to a corresponding rule. For example, when the user accesses a distributed device, covers of all albums on the distributed device may be pre-synchronized. Alternatively, some or all distributed thumbnails of a type of album on the distributed device may be pre-synchronized, where a quantity of times of accessing the type of album is greater than or equal to a threshold. This is not limited.

It should be noted that, when an actual operation of a user is inconsistent with the pre-synchronized thumbnail or preview image in this application, a process of pre-synchronizing the thumbnail or preview image may be terminated.

According to the solution provided in embodiments of this application, in a process in which the local device synchronizes the distributed thumbnail or preview image, a thumbnail or preview image that may be to be accessed by the user is predicted, and the thumbnail or preview image that may need to be accessed is synchronized in advance, so that when the user actually accesses the distributed image, the device can immediately present a corresponding thumbnail or preview image. In this case, waiting duration can be reduced when the user browses the distributed image, and in particular, in a scenario in which the user quickly slides, performance of obtaining the distributed image by an application can be improved. In addition, a blank page is avoided in the scenario in which the user quickly slides. In addition, the solution of this application is not limited to an application. For another application, a distributed thumbnail or a distributed preview image required by the user may alternatively be obtained by using a distributed image pre-synchronization solution, to improve user experience.

The foregoing describes the generation manner or the synchronization manner of the thumbnail and the preview image. However, because the thumbnail and the preview image occupy storage space of the device, the thumbnail and the preview image cannot be endlessly generated or synchronized. Generally, a storage size of the thumbnail is dozens of KB, and a storage size of the preview image is hundreds of KB. Therefore, compared with that of the preview image, the storage size occupied by the thumbnail may be almost ignored. Therefore, an embodiment of this application provides a space optimization solution, to actively clear a preview image that is not required by a user.

As mentioned above, the thumbnail module may generate the thumbnail based on the media file stored in the sandbox of the common file management module, and uniformly manage the generated thumbnail. The thumbnail module can also uniformly manage the preview image of the media file. When the user accesses a preview image, the application may obtain the corresponding preview image through a thumbnail obtaining interface. In addition, the thumbnail module may further add a corresponding field to a relational database, to record a timestamp of accessing the preview image by the user.

Specifically, when the user accesses a preview image of a media file in the device, if the preview image of the media file is not generated, when the thumbnail module generates the preview image corresponding to the media file for the user and caches the preview image, an access record of the preview image and a quantity of preview images in the device may be increased. When an idle identification module identifies that the device is idle, a space optimization module may first actively obtain the quantity of preview images in the device, and determine whether the quantity of preview images exceeds a preset threshold. When the quantity of preview images in the device does not exceed the preset threshold, a clearing task ends. When the quantity of preview images in the device exceeds the preset threshold, the space optimization module may perform clearing according to a corresponding rule, and end the clearing task until the quantity of preview images reaches a specified value.

The clearing rule may include but is not limited to two types: a clearing rule of no user access for longest time and a clearing rule of a quantity of user access times within a period of time.

It should be noted that preview images in the device may include a local preview image and a distributed preview image. The following separately describes specific clearing processes of the local preview image and the distributed preview image with reference to the foregoing clearing rules.

### Scenario 1: Clearing the local preview image

### Rule 1: The clearing rule of no user access for longest time

For example, it is assumed that a local preset threshold is 4000, and a local specified value is 2000. If the idle identification module identifies that the device is idle and the space optimization module obtains that the quantity of local preview images in the device is 5000, which are a preview image 1, a preview image 2, a preview image 3, ..., a preview image 4998, a preview image 4999, and a preview image 5000, because the quantity 5000 of local preview images in the device is greater than the local preset threshold 4000, the space optimization module may clear the local preview images according to the clearing rule of no user access for longest time, and end the clearing task when the quantity of local preview images in the device reaches 2000. In other words, the space optimization module needs to clear 3000 local preview images this time.
(1) Sort the local preview images in the device by time in descending order. It is assumed that the local preview images sorted by time in descending order are as follows:
   the local preview image 2 (last access time of the local preview image: 18:30:00 on July 8, 2022);
   the local preview image 3 (last access time of the local preview image: 18:29:53 on July 8, 2022);
   the local preview image 4 (last access time of the local preview image: 18:29:30 on July 8, 2022);
   the local preview image 550 (last access time of the local preview image: 10:26:20 on July 6, 2022);
   the local preview image 551 (last access time of the local preview image: 10:26:10 on July 6, 2022);
   the local preview image 552 (last access time of the local preview image: 10:26:00 on July 6, 2022);
      ...,
      ...,
      ...,
   the local preview image 102 (last access time of the local preview image: 08:56:30 on June 6, 2022);
   the local preview image 133 (last access time of the local preview image: 08:56:00 on June 6, 2022);
   the local preview image 810 (last access time of the local preview image: 08:55:30 on June 6, 2022);
   the local preview image 3550 (last access time of the local preview image: 11 :56:30 on April 10, 2022);
   the local preview image 3551 (last access time of the local preview image: 11 :56:00 on April 10, 2022);
   the local preview image 3552 (last access time of the local preview image: 11 :55:20 on April 10, 2022);
   The local preview image 3553 (last access time of the local preview image: 11:55:00 on April 10, 2022);
   the local preview image 220 (last access time of the local preview image: 09:26:30 on January 3, 2022);
   the local preview image 221 (last access time of the local preview image: 09:26:00 on January 2, 2022); and
   the local preview image 222 (last access time of the local preview image: 09:25:30 on January 2, 2022).

According to the foregoing order, the space optimization module may clear the last 3000 local preview images.

(2) Sort the local preview images in the device by time in ascending order. It is assumed that the local preview images sorted by time in ascending order are as follows:
the local preview image 222 (last access time of the local preview image: 09:25:30 on January 2, 2022);
the local preview image 221 (last access time of the local preview image: 09:26:00 on January 2, 2022);
the local preview image 220 (last access time of the local preview image: 09:26:30 on January 3, 2022);
the local preview image 3553 (last access time of the local preview image: 11 :55:00 on April 10, 2022);
the local preview image 3552 (last access time of the local preview image: 11 :55:20 on April 10, 2022);
the local preview image 3550 (last access time of the local preview image: 11 :56:30 on April 10, 2022);
the local preview image 810 (last access time of the local preview image: 08:55:30 on June 6, 2022);
the local preview image 133 (last access time of the local preview image: 08:56:00 on June 6, 2022);
the local preview image 102 (last access time of the local preview image: 08:56:30 on June 6, 2022);
   ...,
   ...,
   ...,
the local preview image 552 (last access time of the local preview image: 10:26:00 on July 6, 2022);
the local preview image 551 (last access time of the local preview image: 10:26:10 on July 6, 2022);
the local preview image 550 (last access time of the local preview image: 10:26:20 on July 6, 2022);
the local preview image 4 (last access time of the local preview image: 18:29:30 on July 8, 2022);
the local preview image 3 (last access time of the local preview image: 18:29:53 on July 8, 2022); and
the local preview image 2 (last access time of the local preview image: 18:30:00 on July 8, 2022).

According to the foregoing order, the space optimization module may clear the first 3000 local preview images.

### Rule 2: The clearing rule of the quantity of user access times within a period of time

The foregoing description is still used as an example. It is assumed that the local preset threshold is 4000, and the local specified value is 2000. If the idle identification module identifies that the device is idle and the space optimization module obtains that the quantity of local preview images in the device is 5000, which are the preview image 1, the preview image 2, the preview image 3, ..., the preview image 4998, the preview image 4999, and the preview image 5000, because the quantity 5000 of local preview images in the device is greater than the local preset threshold 4000, the space optimization module may clear the local preview images according to the clearing rule of the quantity of user access times within a period of time, and end the clearing task when the quantity of local preview images in the device reaches 2000. In other words, the space optimization module needs to clear 3000 local preview images this time. The period of time in embodiments of this application may be one week, one month, or three months. This is not limited. In the following, an example in which the period of time is one month is used for description.
(1) Sort the local preview images in descending order based on the quantity of user access times of the local preview images in one month. It is assumed that the local preview images sorted by the quantity of access times in descending order are as follows:
   the local preview image 2 (a quantity of access times of the local preview image in a last month is 110);
   the local preview image 3 (a quantity of access times of the local preview image in the last month is 100);
   the local preview image 4 (a quantity of access times of the local preview image in the last month is 80);
   the local preview image 1550 (a quantity of access times of the local preview image in the last month is 60);
   the local preview image 1551 (a quantity of access times of the local preview image in the last month is 50);
   the local preview image 1552 (a quantity of access times of the local preview image in the last month is 40);
      ...,
      ...,
      ...,
   the local preview image 1020 (a quantity of access times of the local preview image in the last month is 1);
   the local preview image 1330 (a quantity of access times of the local preview image in the last month is 1);
   the local preview image 810 (a quantity of access times of the local preview image in the last month is 1);
   the local preview image 3550 (a quantity of access times of the local preview image in the last month is 0);
   the local preview image 3551 (a quantity of access times of the local preview image in the last month is 0);
   the local preview image 3552 (a quantity of access times of the local preview image in the last month is 0);
   the local preview image 3553 (a quantity of access times of the local preview image in the last month is 0);
   the local preview image 2200 (a quantity of access times of the local preview image in the last month is 0);
   the local preview image 2210 (a quantity of access times of the local preview image in the last month is 0); and
   the local preview image 2220 (a quantity of access times of the local preview image in the last month is 0).

According to the foregoing order, the space optimization module may clear the last 3000 local preview images.

(2) Sort the local preview images in ascending order based on the quantity of user access times of the local preview images in one month. It is assumed that the local preview images sorted by the quantity of access times in ascending order are as follows:
the local preview image 2220 (the quantity of access times of the local preview image in the last month is 0);
the local preview image 2210 (the quantity of access times of the local preview image in the last month is 0);
the local preview image 2200 (the quantity of access times of the local preview image in the last month is 0);
the local preview image 3553 (the quantity of access times of the local preview image in the last month is 0);
the local preview image 3552 (the quantity of access times of the local preview image in the last month is 0);
the local preview image 3551 (the quantity of access times of the local preview image in the last month is 0);
the local preview image 3550 (the quantity of access times of the local preview image in the last month is 0);
the local preview image 810 (the quantity of access times of the local preview image in the last month is 1);
the local preview image 1330 (the quantity of access times of the local preview image in the last month is 1);
the local preview image 1020 (the quantity of access times of the local preview image in the last month is 1);
   ...,
   ...,
   ...,
the local preview image 1552 (the quantity of access times of the local preview image in the last month is 40);
the local preview image 1551 (the quantity of access times of the local preview image in the last month is 50);
the local preview image 1550 (the quantity of access times of the local preview image in the last month is 60);
the local preview image 4 (the quantity of access times of the local preview image in the last month is 80);
the local preview image 3 (the quantity of access times of the local preview image in the last month is 100); and
the local preview image 2 (a quantity of access times of the local preview image in the last month is 110).

According to the foregoing order, the space optimization module may clear the first 3000 local preview images.

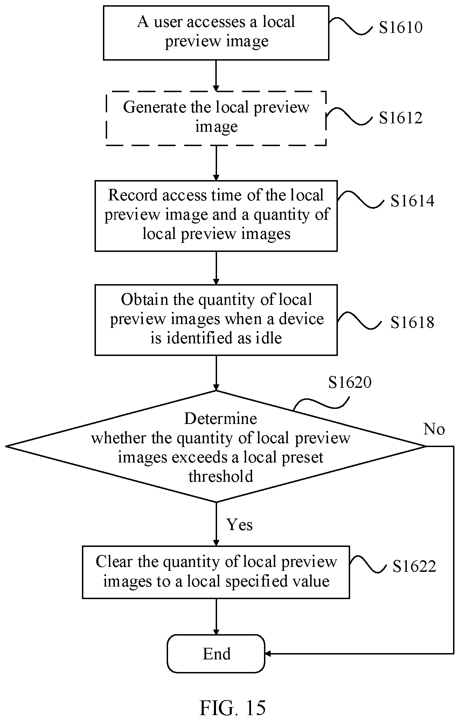

FIG. 15 is a diagram of a local preview image clearing method according to an embodiment of this application. The method may include steps S1610 to S1622.

S1610: A user accesses a local preview image.

S1612: Generate the local preview image.

S1614: Record access time of the local preview image and a quantity of local preview images.

In embodiments of this application, when the user accesses a local preview image in a device, an application may obtain a corresponding local preview image from a thumbnail module through a thumbnail obtaining interface. In addition, when the user accesses the local preview image, the thumbnail module may record a timestamp when the user accesses the local preview image and the quantity of local preview images in the device.

It may be understood that, if the local preview image accessed by the user does not exist in the device, the thumbnail module may generate the local preview image, and record the timestamp when the user accesses the local preview image and the quantity of local preview images in the device. If the local preview image accessed by the user already exists, the thumbnail module may record the timestamp when the user accesses the local preview image.

For example, the thumbnail module may record the access time of the local preview image based on List 1.

**Table 1**

| | Access time |
|---|---|
| Local preview image 1 | 5/2/2022 |
| Local preview image 2 | 5/2/2022, 5/4/2022, and 5/6/2022 |
| Local preview image 3 | 5/2/2022, 5/5/2022, 5/7/2022, and 5/8/2022 |
| ... | ... |
| ... | ... |
| Local preview image n-1 | 5/2/2022, 5/20/2022, and 5/23/2022 |
| Local preview image n | 5/3/2022, 5/14/2022, and 5/16/2022 |

Refer to the foregoing Table 1. The space optimization module may search for latest access time of the local preview images based on the access time of the local preview images recorded in the table, and clear the local preview images according to the foregoing rule 1. The space optimization module may alternatively calculate, based on the access time recorded in the foregoing table, a quantity of access times of the local preview images in a period of time, to clear the local preview images according to the foregoing rule 2.

Certainly, in some possible implementations, the thumbnail module may alternatively record, based on List 2, latest access time of the local preview images and the quantity of access times of the local preview images in a period of time. In Table 2, an example in which the period of time is one month is used.

**Table 2**

| | Quantity of access times in a last month | Latest access time |
|---|---|---|
| Local preview image 1 | 1 | 5/2/2022 |
| Local preview image 2 | 3 | 5/6/2022 |
| Local preview image 3 | 4 | 5/8/2022 |
| ... | | ... |
| ... | | ... |
| Local preview image n-1 | 3 | 5/23/2022 |
| Local preview image n | 3 | 5/16/2022 |

Refer to the foregoing Table 2. The space optimization module may clear the local preview images based on the recorded latest access time of the local preview images and according to the foregoing rule 1. The space optimization module may alternatively clear the local preview images based on the quantity of access times of the local preview images in the latest month recorded in the table and according to the foregoing rule 2.

S1618: Obtain the quantity of local preview images when the device is identified as idle.

S1620: Determine whether the quantity of local preview images exceeds the local preset threshold.

If the quantity of local preview images exceeds the local preset threshold, step S1622 is performed; or if the quantity of local preview images does not exceed the local preset threshold, the process ends.

S1622: Clear the quantity of local preview images to the local specified value.

The local preset threshold in embodiments of this application may be 4000 in the foregoing example, and the local specified value may be 2000 in the foregoing example. When identifying that the device is idle, the idle identification module obtains that the quantity of the local preview images in the device exceeds the local preset threshold, the space optimization module may clear the local preview images according to a corresponding rule (for example, the rule 1 or the rule 2 mentioned in the foregoing embodiments) until the quantity of local preview images in the device reaches the local specified value.

### Scenario 2: Clearing the distributed preview image

The distributed preview image is synchronized only when the user connects devices at two ends to perform distributed access. Therefore, when duration in which the devices at the two ends are not connected exceeds preset duration or disconnection duration exceeds preset duration, the space optimization module may clear, from the local device, all distributed preview images synchronized from the peer device. When the devices at the two ends are connected within the preset duration or the disconnection duration does not exceed the preset duration, the space optimization module may first obtain a quantity of distributed preview images in the local device, and determine whether the quantity of distributed preview images exceeds a distributed preset threshold. If the quantity of distributed preview images in the local device exceeds the distributed preset threshold, the space optimization module may clear the distributed preview images until the quantity of distributed preview images in the local device reaches a distributed specified value. If the quantity of distributed preview images in the local device does not exceed the distributed preset threshold, current clearing of the distributed preview images ends.

For example, the foregoing example is still used as an example. It is assumed that when identifying that the device is idle, the idle identification module obtains that the quantity of distributed preview images in the device is 5000, where the 5000 distributed preview images may be synchronized by the local device from a plurality of distributed devices. In this embodiment of this application, two distributed devices are used as an example. It is assumed that the local device synchronizes 1500 distributed preview images from a distributed device 1, and synchronizes 3500 distributed preview images from a distributed device 2.
(1) The local device is not connected to the two distributed devices within preset duration.

It is assumed that the preset duration is 480 hours (that is, 20 days), and the local device is not connected to the two distributed devices for 720 hours (that is, 30 days). Because duration in which the local device is not connected to the two distributed devices exceeds the preset duration 480 hours, the space optimization module may clear, from the local device, all the 5000 distributed preview images synchronized from the two distributed devices.

(2) The local device is connected to one of the two distributed devices within the preset duration.

It is assumed that the distributed preset threshold in this embodiment of this application is 2800, the distributed specified value is 2000, and the local device is not connected to the distributed device 1 for 720 hours (that is, 30 days), but is connected to the distributed device 2 at a 241^{th} hour. Because duration in which the local device is not connected to the distributed device 1 exceeds the preset duration 480 hours, the space optimization module may clear, from the local device, all the 1500 distributed preview images synchronized from the distributed device 1. In this case, the quantity of distributed preview images in the local device is 3500. Because the quantity of distributed preview images in the local device is greater than the distributed preset threshold, the space optimization module may further clear the distributed preview images until the quantity of distributed preview images in the local device reaches 2000, that is, the space optimization module may clear 1500 distributed preview images from the remaining 3500 distributed preview images. For a specific clearing rule, refer to the foregoing rule 1 or rule 2. Details are not described herein.

It is assumed that the local device is not connected to the distributed device 2 for 720 hours (that is, 30 days), but is connected to the distributed device 1 at the 241^{th} hour. Because duration in which the local device is not connected to the distributed device 2 exceeds the preset duration 480 hours, the space optimization module may clear, from the local device, all the 3500 distributed preview images synchronized from the distributed device 2. In this case, the quantity of distributed preview images in the local device is 1500. Because the quantity of distributed preview images in the local device is less than the distributed preset threshold, the distributed preview image clearing task may be ended.

(3) The local device is connected to the two distributed devices within the preset duration.

It is still assumed that the distributed preset threshold in this embodiment of this application is 2800, the distributed specified value is 2000, and the local device is connected to the two distributed devices at the 241^{th} hour. Because the two distributed devices are connected to the local device within the preset duration, when the quantity of distributed preview images is greater than the distributed threshold, the space optimization module may uniformly clear the distributed preview images. If the quantity of distributed preview images in the local device is 5000, because the quantity of distributed preview images is greater than the distributed preset threshold 2800, the space optimization module may uniformly clear the distributed preview images until the quantity of distributed preview images in the local device reaches 2000, that is, the space optimization module may clear 3000 distributed preview images from the 5000 distributed preview images. For a specific clearing rule, refer to the foregoing rule 1 or rule 2. Details are not described herein.

In conclusion, for the local preview images and the distributed preview images, the space optimization module may clear the local preview images and the distributed preview images based on different determining processes. If clearing of the local preview images and the distributed preview images is considered at the same time, clearing may be performed based on the following process.

When a preview image clearing task starts, the space optimization module may preferentially clear the local preview images. Generally, a media file in a recycle bin is directly deleted when the recycle bin expires. Therefore, when the quantity of local preview images exceeds the local preset threshold, the space optimization module may first clear preview images in the recycle bin, and then clear the local preview images based on user access records until the quantity of local preview images after clearing reaches the local specified value.

Then, the distributed preview images are cleared. The local device may preferentially determine a distributed device connected to the local device. When duration in which the local device is not connected to a distributed device exceeds the preset duration, the space optimization module may clear, from the local device, all distributed preview images synchronized from the distributed device. When the local device is connected to a distributed device within the preset duration, and the quantity of distributed preview images in the local device exceeds the distributed preset threshold, the space optimization module clears the distributed preview images until the quantity of distributed preview images after the clearing reaches the distributed specified value.

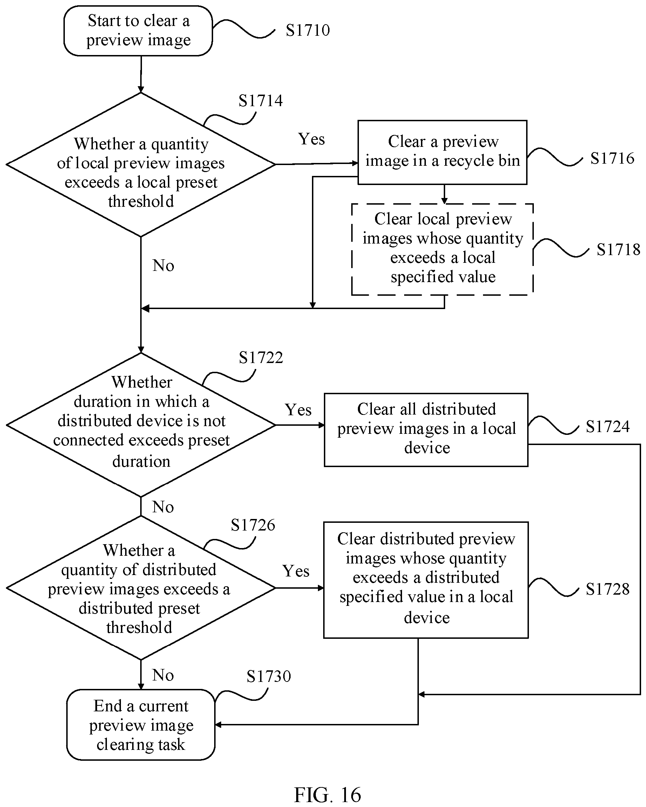

FIG. 16 is a diagram of a preview image clearing method according to an embodiment of this application. Preview images cleared in the method may include local preview images and distributed preview images, and the method may include steps S1710 to S 1730.

S1710: Start to clear a preview image.

In this embodiment of this application, when an idle identification module in a local device identifies that the local device is in an idle state, preview image clearing may be triggered. The idle identification module may actively obtain a quantity of local preview images and a quantity of distributed preview images in the local device.

S 1714: Whether the quantity of local preview images exceeds a preset threshold.

If the quantity of local preview images exceeds the preset threshold, step S 1716 is performed; or if the quantity of local preview images does not exceed the preset threshold, step S 1722 is performed.

S1716: Clear a preview image in a recycle bin.

S 1718: Clear local preview images whose quantity exceeds a local specified value.

As shown in the foregoing example, it is assumed that the space optimization module obtains that the quantity of local preview images in the device is 5000, which exceeds the local preset threshold 4000, the space optimization module may preferentially clear the preview image in the recycle bin. After the preview image in the recycle bin is cleared, the quantity of local preview images in the device still exceeds the local specified value 2000. In this case, the space optimization module may further clear the local preview images according to the foregoing rule 1 or rule 2, until the quantity of local preview images reaches the local specified value.

If the quantity of preview images in the recycle bin is 600, the space optimization module may clear all the 600 preview images in the recycle bin. In this case, the local device still has 4400 local preview images, and the quantity of local preview images is greater than the local specified value 2000. Based on this, the space optimization module may clear 2400 local preview images from the remaining 4400 local preview images according to the foregoing rule 1 or rule 2.

If the quantity of preview images in the recycle bin is 3600, the space optimization module may clear all the 3600 preview images in the recycle bin. In this case, there are still 1400 local preview images in the local device, and the quantity of local preview images 1400 is less than the local specified value 2000. In this case, local preview image clearing ends.

It may be understood that the foregoing step S 1718 is an optional step. In other words, after step S 1716 is performed, if the quantity of remaining local preview images in the local device exceeds the local specified value, step S 1718 may be performed. After step S 1716 is performed, if the quantity of remaining local preview images in the local device does not exceed the local specified value, step S 1718 may be skipped, and step S 1722 is directly performed.

S 1722: Whether duration in which a distributed device is not connected exceeds preset duration.

If the duration in which the distributed device is not connected exceeds the preset duration, step S 1724 is performed; or if the duration in which the distributed device is not connected does not exceed the preset duration, step S1726 is performed.

1724: Clear all distributed preview images in the local device.

S 1726: Whether the quantity of distributed preview images exceeds a distributed preset threshold.

If the quantity of distributed preview images exceeds the distributed preset threshold, step S 1728 is performed; or if the quantity of distributed preview images does not exceed the distributed preset threshold, step S 1730 is performed.

S 1728: Clear distributed preview images whose quantity exceeds a distributed specified value in the local device.

S 1730: End a current preview image clearing task.

In addition to clearing the local preview image, the space optimization module may also clear the distributed preview image. The space optimization module in the local device may determine whether duration in which a distributed device that is previously connected to the local device is not connected exceeds the preset duration, and clear the distributed preview image based on a determining result. The following uses an example in which the preset duration is 480 hours to describe a specific clearing process.
(1) Duration in which the distributed device is not connected to the local device exceeds the preset duration.

If the duration in which a distributed device is not connected to the local device exceeds the preset duration 480 hours, in this case, regardless of the quantity of distributed preview images that are synchronized from the distributed device and that are in the local device, the space optimization module may clear, from the local device, all distributed preview images synchronized from the distributed device. The value shown in the foregoing example is still used as an example. It is assumed that the quantity of distributed preview images synchronized from the distributed device 1 in the local device is 1500. Because duration in which the distributed device is not connected to the local device exceeds the preset duration, in this case, the space optimization module in the local device may clear all the 1500 distributed preview images synchronized from the distributed device 1.

(2) Duration in which the distributed device is not connected to the local device does not exceed the preset duration.

If duration in which a distributed device is not connected to the local device does not exceed the preset duration 480 hours, that is, the distributed device has been connected to the local device within the 480 hours. In this case, a value of the quantity of distributed preview images synchronized from the distributed device in the local device and a value of the distributed preset threshold may be first determined. In addition, when the quantity of distributed preview images is greater than the distributed preset threshold, the distributed preview images are cleared until the quantity of distributed preview images reaches the distributed specified value.

For example, it is assumed that the distributed device 2 has been connected to the local device within the preset duration, the quantity of distributed preview images synchronized from the distributed device 2 in the local device is 3500, and the distributed preset threshold is 2800. Because the quantity 3500 of distributed preview images synchronized from the distributed device 2 in the local device is greater than the distributed preset threshold 2800, in this case, the space optimization module in the local device may clear the 3500 distributed preview images, and clear the quantity of distributed preview images to the distributed specified value. If the distributed specified value is 2000, the space optimization module may delete 1500 distributed preview images from the 3500 distributed preview images. For a specific clearing rule, refer to the foregoing rule 1 or rule 2. Details are not described.

In the foregoing embodiments, the local preset threshold in step S 1714 may be the same as or different from the distributed preset threshold in step S 1726; and the local specified value in step S 1718 may be the same as or different from the distributed specified value in step S 1728. The preset threshold (including the local preset threshold and the distributed preset threshold) and/or the specified value (including the local specified value and the distributed specified value) in embodiments of this application may be a fixed value, or may be a dynamically changing value. This is not limited.

In some embodiments, a sequence for clearing the preview images may alternatively be: clearing the distributed preview images first, and then clearing the local preview images. This is not limited.

In embodiments of this application, for different devices, learning may be first performed based on an algorithm (for example, an artificial intelligence (artificial intelligence, AI) algorithm), and the preset threshold and/or the specified value are/is set based on a learning result. For example, if devices are classified based on the learning result, the devices may be classified into a level-I device, a level-II device, and a level-III device. The level-I device is used at a highest frequency, that is, a user uses this type of device most frequently. Therefore, a preset threshold and/or a specified value for this type of device may be set relatively high. The level-II device is used at a second highest frequency, that is, the user uses this type of device relatively frequently. Therefore, a preset threshold and/or a specified value for this type of device may be set relatively low. The level-III device is used at a lowest frequency, that is, the user almost rarely uses this type of device. Therefore, a preset threshold and/or a specified value for this type of device may be set lowest.

In addition, in some possible implementations, when the idle identification module in the local device identifies that the local device is in the idle state and determines that the quantity of local preview images exceeds the local preset threshold, in addition to clearing the local preview images, the space optimization module may also clear thumbnails associated with the local preview images. Similarly, when duration in which the distributed device is not connected to the local device exceeds the preset duration, or when the distributed device has been connected to the local device within the preset duration, but the quantity of distributed preview images exceeds the distributed preset threshold, in addition to clearing the distributed preview images, the space optimization module in the local device may further clear distributed thumbnails associated with the distributed preview images. This is not limited. A specific clearing process is consistent with the foregoing process in FIG. 16, and a difference lies in that the thumbnails associated with the preview images are also cleared when the preview images are cleared.

According to the solution provided in this application, when the idle identification module in the local device identifies that the local device is in the idle state, the space optimization module in the local device may intelligently clear, according to a corresponding rule, the preview image that is not required by the user, to achieve an objective of clearing storage space and to reduce a waste of storage space. This improves utilization of a storage device of the user.

It should be noted that values shown in the foregoing embodiments are merely examples for description, and may alternatively be other values. This should not impose a special limitation on this application.

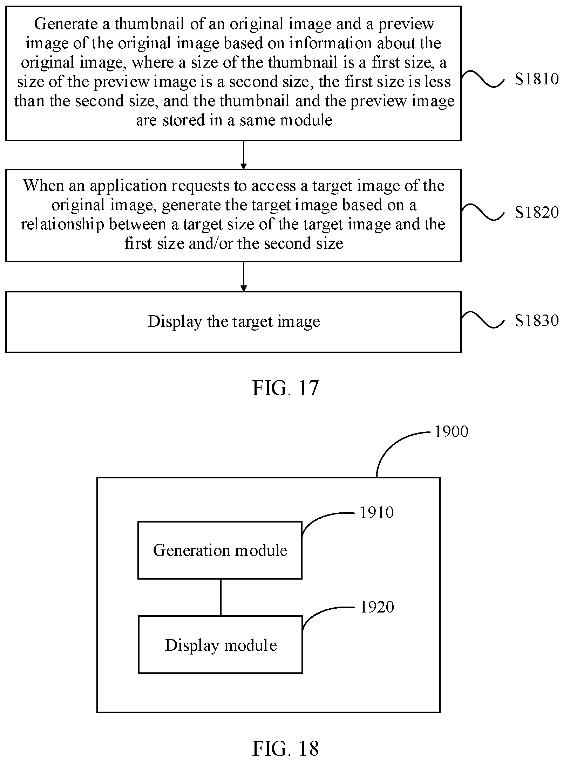

FIG. 17 is a diagram of an image obtaining method according to an embodiment of this application. The method may be applied to a first device, and the method may include steps S1810 to S1830.

S1810: Generate a thumbnail of an original image and a preview image of the original image based on information about the original image, where a size of the thumbnail is a first size, a size of the preview image is a second size, the first size is less than the second size, and the thumbnail and the preview image are stored in a same module.

The first size in this embodiment of this application may be understood as a size corresponding to the thumbnail with 256*256 pixels shown in the foregoing embodiments, and the second size may be understood as a size corresponding to the preview image with 1080*720 pixels shown in the foregoing embodiments. Generally, to ensure image quality, a quantity of pixels is in direct proportion to a size of the image. Therefore, a size of the thumbnail with 256*256 pixels is less than a size of the preview image with 1080*720 pixels.

In this embodiment of this application, the thumbnail and the preview image are stored in the same module, and the module may be the thumbnail data organization storage module in FIG. 4.

S1820: When an application requests to access a target image of the original image, generate the target image based on a relationship between a target size of the target image and the first size and/or the second size.

The target size in this embodiment of this application may be a size corresponding to an image with n*m pixels, where n and m are any positive integers, for example, 2160* 1440, 720*680, and 640*480 as shown in the foregoing example.

S1830: Display the target image.

According to the solution provided in this application, the first device uniformly generates the thumbnail and the preview image of fixed storage sizes based on information about the original image. When the target size of the target image that needs to be cached by the application is inconsistent with the size of the generated thumbnail and the size of the generated preview image, the target image that is of the target size and that is required by the application may be generated based on information about the existing thumbnail or preview image, so that requirements of different applications for caching images of different sizes can be met. Therefore, a problem that different applications request to store a plurality of thumbnail copies of different sizes based on different resolutions can be resolved, and a waste of space resources can be reduced. In addition, in the solution of this application, the target image that is of the target size and that is required by the application is generated based on information about an existing thumbnail or preview image. Compared with a method for temporarily generating a thumbnail or a preview image based on an application request in the conventional technology, the solution of this application can reduce a waste of time resources, and in particular, can meet a performance requirement of a user for quick browsing. This improves user experience. In addition, the generated thumbnail and the generated preview image in this application are stored in the same module. When the user browses a thumbnail or a preview image by using different applications in a same system, each application may obtain a corresponding thumbnail or preview image from the module, so that user experience in different applications in the same system can be unified.

Optionally, in some embodiments, the generating the target image based on a relationship between a target size of the target image and the first size and/or the second size includes:
if the target size is less than or equal to the first size, zooming out the thumbnail to the target size to obtain the target image;
if the target size is greater than the first size and less than the second size, zooming out the preview image to the target size to obtain the target image; or
if the target size is greater than or equal to the second size, zooming in the preview image to the target size to obtain the target image.

According to the solution provided in this embodiment of this application, when the target size is less than or equal to the first size, the thumbnail may be zoomed out to the target size to obtain the target image; when the target size is greater than the first size and less than the second size, the preview image may be zoomed out to the target size to obtain the target image; or when the target size is greater than or equal to the second size, the preview image may be zoomed in to the target size to obtain the target image. The target image of the target size is generated based on the information about the existing thumbnail or preview image, so that cache requirements of different applications for images of different sizes can be met, the problem that different applications request to store a plurality of thumbnail copies of different sizes based on different resolutions can be resolved, and a waste of space resources is reduced. In addition, the relationship between the target size and the first size and/or the second size is obtained through comparison, so that an appropriate image may be selected and zoomed in or zoomed out to obtain the target image, to improve quality of the target image.

The foregoing step S1810 describes that the thumbnail of the original image and the preview image of the original image are generated based on the information about the original image. The thumbnail and the preview image may be encoded in the following manner.

Optionally, in some embodiments, pixels of the thumbnail are a part of pixels of the preview image, and the method further includes:
encoding information about the pixels of the thumbnail, and storing encoded information in a first byte range; and
encoding information about a pixel other than the pixels of the thumbnail in the preview image, and storing encoded information in a second byte range, where a first byte of the second byte range is adjacent to a last byte of the first byte range.

In this embodiment of this application, for specific encoding processes of the thumbnail and the preview image, refer to the content in FIG. 8. Details are not described herein.

According to the solution provided in this embodiment of this application, an encoder in the first device separately encodes the information about the pixels of the thumbnail and the information about the pixel other than the pixels of the thumbnail in the preview image, stores, in the first byte range, the encoded information obtained by encoding the information about the pixels of the thumbnail, and stores, in the second byte range, the encoded information obtained by encoding the information about the pixel other than the pixels of the thumbnail in the preview image, where the first byte of the second byte range is adjacent to the last byte of the first byte range. Such an encoding manner helps the application obtain a corresponding image. In other words, when the user needs to obtain a thumbnail, the application may directly read encoded information about the thumbnail and decode the encoded information, to obtain the corresponding thumbnail; and when the user needs to obtain a preview image, the application may read encoded information and supplemental encoded information (the supplemental encoded information is information obtained by encoding information about a pixel other than pixels of a thumbnail in the preview image) about the thumbnail, and decode the encoded information and the supplemental encoded information, to obtain the corresponding preview image.

In addition, in this embodiment of this application, thumbnails and preview images of some images may be further pre-generated. There may be two cases. In one case, the first device pre-generates a thumbnail and a preview image of an image in the first device. In the other case, the first device pre-generates a thumbnail and a preview image of an image in the second device. For details, refer to the following description.

Case 1: The first device pre-generates the thumbnail and the preview image of the image in the first device.

Optionally, in some embodiments, the method further includes:
determining whether the original image is an image to be accessed by a user; and
the generating a thumbnail of an original image and a preview image of the original image based on information about the original image includes:
   generating the thumbnail of the original image and the preview image of the original image based on the information about the original image when it is determined that the original image is the image to be accessed by the user.

Optionally, in some embodiments, the generating the thumbnail of the original image and the preview image of the original image based on the information about the original image when it is determined that the original image is the image to be accessed by the user includes:
when it is determined that the original image is the image to be accessed by the user, obtaining a generation request based on a request message, and generating the thumbnail of the original image and the preview image of the original image based on the generation request and the information about the original image; or
when it is determined that the original image is the image to be accessed by the user, and it is checked, based on a preset period, that a generation request exists in a request list, generating the thumbnail of the original image and the preview image of the original image based on the generation request and the information about the original image.

This embodiment of this application mainly relates to foreground thumbnail pre-generation and foreground preview image pre-generation. For a specific thumbnail pre-generation process, refer to related content in FIG. 6. Details are not described herein. A specific preview image generation process is similar to a thumbnail generation process. Details are not described.

According to the solution provided in this embodiment of this application, if it is determined that the original image is the image to be accessed by the user, the thumbnail and the preview image of the original image are generated based on the information about the original image. In this way, a thumbnail and a preview image that may be required by the user may be generated in advance, and a thumbnail module can immediately return a corresponding thumbnail and thumbnail when the user requests for the thumbnail and the preview image. Compared with the method for temporarily generating a thumbnail and a preview image based on an application request in the conventional technology, the solution of this application can reduce the waste of time resources, and in particular, can meet the performance requirement of the user for quick browsing. This improves user experience.

Optionally, in some embodiments, the method further includes:
determining whether the first device is in an idle state; and
the generating a thumbnail of an original image and a preview image of the original image based on information about the original image includes:
generating the thumbnail of the original image and the preview image of the original image based on the information about the original image when it is determined that the first device is in the idle state.

This embodiment of this application mainly relates to background offline thumbnail generation and background preview image offline generation. For a specific thumbnail pre-generation process, refer to content in FIG. 7. Details are not described herein. A specific preview image generation process is similar to a thumbnail generation process. Details are not described.

According to the solution provided in this embodiment of this application, if it is determined that the first device is in the idle state, the thumbnail of the original image and the preview image of the original image may be generated based on the information about the original image. In this way, the thumbnail that may be required by the user can be generated, and the thumbnail module can immediately return the corresponding thumbnail and preview image when the user requests for the thumbnail and the preview image. Compared with the method for temporarily generating a thumbnail and a preview image based on an application request in the conventional technology, the solution of this application can reduce the waste of time resources, and in particular, can meet the performance requirement of the user for quick browsing. This improves user experience.

Case 2: The first device pre-generates a thumbnail and a preview image of an image in the second device.

Optionally, in some embodiments, the method further includes:
when the first device browses a first media file in the second device and the first device does not have a thumbnail corresponding to the first media file, synchronizing the thumbnail corresponding to the first media file to the first device, where the thumbnail corresponding to the first media file includes an image of a current page displayed by the second device when the first device browses the second device, images of N1 pages before the current page, and images of N2 pages after the current page; and N1 and N2 are integers greater than or equal to 1.

This embodiment of this application mainly relates to distributed thumbnail obtaining. For a specific process, refer to related content in FIG. 11. Details are not described herein.

According to the solution provided in this embodiment of this application, when the first device browses the first media file in the second device and the first device does not have the thumbnail corresponding to the first media file, the first device may synchronize the thumbnail corresponding to the first media file to the first device. Because the thumbnail corresponding to the first media file includes the image of the current page displayed by the second device when the first device browses the second device, the images of N1 pages before the current page, and the images of N2 pages after the current page, when the user actually browses an image before the current page or an image after the current page in the second device, the first device may immediately present a corresponding thumbnail. In this way, waiting time of the user during browsing of a distributed thumbnail can be reduced, and in particular, in a scenario in which the user quickly slides, performance of obtaining the distributed thumbnail by the application can be improved. In addition, a blank page is avoided in the scenario in which the user quickly slides.

Optionally, in some embodiments, the method further includes:
when the first device browses a second media file in the second device and the first device does not have a preview image corresponding to the second media file, synchronizing the preview image corresponding to the second media file to the first device, where the preview image corresponding to the second media file includes an image of a current page displayed by the second device when the first device browses the second device, images of N3 pages before the current page, and images of N4 pages after the current page; and N3 and N4 are integers greater than or equal to 1.

According to the solution provided in this embodiment of this application, when the first device browses the first media file in the second device and the first device does not have preview image corresponding to the first media file, the first device may synchronize the preview image corresponding to the first media file to the first device. Because the preview image corresponding to the first media file includes the image of the current page displayed by the second device when the first device browses the second device, the images of N3 pages before the current page, and the images of N4 pages after the current page, when the user actually browses an image before the current page or an image after the current page in the second device, the first device may immediately present the corresponding preview image. In this way, waiting time of the user during browsing of a distributed preview image can be reduced, and in particular, in the scenario in which the user quickly slides, performance of obtaining the distributed preview image by the application can be improved. In addition, the blank page is avoided in the scenario in which the user quickly slides.

Optionally, in some embodiments, the method further includes:
determining, based on a predicted user gesture, a third media file that is in the second device and that is to be accessed by the user; and
pre-synchronizing a thumbnail of the third media file or a preview image of the third media file.

Optionally, in some embodiments, the determining, based on a predicted user gesture, a third media file that is in the second device and that is to be accessed by the user includes:
if the predicted user gesture is sliding upward, determining that the third media file includes images of M1 pages after an image of a current page displayed by the second electronic device;
if the predicted user gesture is sliding downward, determining that the third media file includes images of M2 pages before the image of the current page displayed by the second electronic device;
if the predicted user gesture is sliding leftward, determining that the third media file includes images of M3 pages after the image of the current page displayed by the second electronic device; or
if the predicted user gesture is sliding rightward, determining that the third media file includes images of M4 pages before the image of the current page displayed by the second electronic device, where M1, M2, M3, and M4 are integers greater than or equal to 1.

The third media file in this embodiment of this application varies with different predicted user gestures. When the predicted user gesture is sliding upward or leftward, the third media file includes an image after the image of the current page displayed by the second electronic device. When the predicted user gesture is sliding downward or rightward, the third media file includes an image before the image of the current page displayed by the second electronic device. For details, refer to related content in FIG. 12(a) to FIG. 12(e) and FIG. 13(a) to FIG. 13(f).

According to the solution provided in embodiments of this application, the first device determines, based on the predicted user gesture, the third media file that is in the second device and that is to be accessed by the user, and pre-synchronizes the thumbnail of the third media file or the preview image of the third media file. When the user actually accesses a distributed image, the first device may immediately present a corresponding thumbnail or preview image. In this way, waiting time of the user during browsing of the distributed image can be reduced, and in particular, in the scenario in which the user quickly slides, performance of obtaining the distributed image by the application can be improved. In addition, the blank page is avoided in the scenario in which the user quickly slides.

In addition, the thumbnail and the preview image occupy storage space of the device, and compared with that of the preview image, a storage size occupied by the thumbnail may be almost ignored. Therefore, an embodiment of this application provides a space optimization solution, to actively clear a preview image that is not required by the user.

Optionally, in some embodiments, the method further includes:
determining whether the first device is in an idle state; and
when it is determined that the first device is in the idle state, and a quantity of local preview images in the first device is greater than a first threshold, clearing the local preview images, where the local preview image is a preview image generated by the first device based on the information about the original image stored in the first device.

In this embodiment of this application, an action of determining whether the first device is in the idle state may be performed by an idle identification module in the first device. When the quantity of local preview images in the first device is greater than the first threshold, an action of clearing the local preview images may be performed by a space optimization module in the first device. The first threshold in this embodiment of this application may be the preset threshold 4000 in the foregoing example. When the quantity of local preview images in the first device is greater than the first threshold 4000, the space optimization module may clear the local preview images.

According to the solution provided in embodiments of this application, when the first device identifies that the first device is in the idle state and the quantity of local preview images in the first device is greater than the first threshold, the first device may clear the local preview image that is not required by the user, to achieve an objective of clearing storage space and to reduce a waste of storage space. This improves utilization of a storage device of the user.

Optionally, in some embodiments, the clearing the local preview image includes:
sorting the local preview images based on time of accessing the local preview images by the user, and clearing the quantity of local preview images to a first specified value based on a sorting result; or
sorting the local preview images based on a quantity of times of accessing the local preview images by the user, and clearing the quantity of local preview images to the first specified value based on a sorting result.

In this embodiment of this application, when the local preview images are sorted based on the time of accessing the local preview images by the user, the local preview images may be sorted in descending order of time, or may be sorted in ascending order of time. If the local preview images are sorted by time in descending order, the local preview images that are ranked low may be deleted first. If the local preview images are sorted by time in ascending order, the local preview images that are ranked high may be deleted first. For a specific clearing process, refer to the local preview image clearing process in the foregoing case 1.

According to the solution provided in embodiments of this application, the local preview images are sorted based on the time of accessing the local preview images by the user, or the local preview images are sorted based on the quantity of times of accessing the local preview images by the user, and the quantity of local preview images is cleared to the first specified value based on the sorting result. This ensures that the local preview images are cleared in an orderly manner.

Optionally, in some embodiments, the method further includes:
clearing a distributed preview image in the first device, where the distributed preview image is a preview image obtained by the first device from the second device, or a preview image generated by the first device based on an original image read from the second device.

According to the solution provided in embodiments of this application, when the first device identifies that the first device is in the idle state, the first device may clear the distributed preview image that is not required by the user, to achieve the objective of clearing storage space and to reduce the waste of storage space. This improves the utilization of the storage device of the user.

Optionally, in some embodiments, the clearing distributed preview images in the first device includes:
determining a value of duration in which the second device is disconnected from the first device and a value of preset duration, where the disconnection duration is disconnection duration between two adjacent connections between the second device and the first device; and
if the disconnection duration is greater than the preset duration, clearing all distributed preview images in the first device; or
if the disconnection duration is less than or equal to the preset duration, and a quantity of distributed preview images is greater than a second threshold, clearing a part of the distributed preview images in the first device.

The disconnection duration in this embodiment of this application may be understood as duration of one disconnection between devices, that is, the devices are not connected within the duration.

In this embodiment of this application, the preset duration may be 480 hours in the foregoing example, and all or some of the distributed preview images are cleared based on the value of the disconnection duration and the value of the preset duration. For a specific process, refer to the distributed preview image clearing process in case 2.

According to the solution provided in embodiments of this application, the value of the disconnection duration between the second device and the first device and the value of the preset duration are determined, so that all the distributed preview images or some distributed preview images in the first device are cleared. In this application, whether to clear all the distributed preview images or some distributed preview images is selected based on the value of the disconnection duration between devices and the value of the preset duration. Therefore, a requirement of browsing the distributed preview image by the user can be further met as much as possible while the objective of clearing storage space is achieved.

Optionally, in some embodiments, the clearing a part of the distributed preview images in the first device includes:
sorting the distributed preview images based on time of accessing the distributed preview images by the user, and clearing the quantity of distributed preview images to a second specified value based on a sorting result; or
sorting the distributed preview images based on a quantity of times of accessing the distributed preview images by the user, and clearing the quantity of distributed preview images to the second specified value based on a sorting result.

Similarly, when the distributed preview images are sorted based on the time of accessing the distributed preview images by the user, the distributed preview images may be sorted in descending order of time, or may be sorted in ascending order of time. If the distributed preview images are sorted by time in descending order, the distributed preview images that are ranked low may be deleted first. If the distributed preview images are sorted by time in ascending order, the distributed preview images that are ranked high may be deleted first.

According to the solution provided in embodiments of this application, the distributed preview images are sorted based on the time of accessing the distributed preview images by the user, or the distributed preview images are sorted based on the quantity of times of accessing the distributed preview images by the user, and the quantity of distributed preview images is cleared to the second specified value based on the sorting result. This ensures that the distributed preview images are cleared in an orderly manner.

It may be understood that, to implement the foregoing functions, the electronic device includes corresponding hardware and/or software modules for performing the functions. With reference to algorithms and steps in examples described in embodiments disclosed in this specification, this application can be implemented by hardware or a combination of hardware and computer software. Whether a function is performed by hardware or computer software driving hardware depends on a specific application and a design constraint condition of the technical solution. A person skilled in the art may use different methods to implement the described functions for each specific application with reference to embodiments. However, it should not be considered that the implementation goes beyond the scope of this application.

In embodiments, functional modules of the electronic device may be obtained through division based on the foregoing method examples. For example, each functional module may be obtained through division in correspondence to each function, or two or more functions may be integrated into one processing module. The integrated module may be implemented in a form of hardware. It should be noted that the module division in this embodiment is an example, and is merely logical function division. In actual implementation, there may be another division manner.

When each function module is obtained through division based on each corresponding function, FIG. 18 is a possible composition diagram of the electronic device in the foregoing embodiments. As shown in FIG. 18, an electronic device 1900 may include a generation module 1910 and a display module 1920.

The generation module 1910 may be configured to support the electronic device 1900 in performing step S1810, S1820, or the like, and/or used in another process of the technology described in this specification.

The display module 1920 may be configured to support the electronic device 1900 in performing step S1830 and the like, and/or used in another process of the technology described in this specification.

It should be noted that all related content of the steps in the foregoing method embodiments may be referenced to function descriptions of corresponding functional units. Details are not described herein.

The electronic device provided in this embodiment is configured to perform the foregoing method in this application, and therefore can achieve same effect as the foregoing implementation method.

When an integrated unit is used, the electronic device may include a processing module, a storage module, and a communication module. The processing module may be configured to control and manage an action of the electronic device, for example, may be configured to support the electronic device in performing the steps performed by the foregoing units. The storage module may be configured to support the electronic device in storing program code, data, and the like. The communication module may be configured to support the electronic device in communicating with another device.

The processing module may be a processor or a controller. The processor may implement or execute various example logical blocks, modules, and circuits described with reference to content disclosed in this application. Alternatively, the processor may be a combination of processors implementing a computing function, for example, a combination including one or more microprocessors, or a combination of a digital signal processor (digital signal processor, DSP) and a microprocessor. The storage module may be a memory. The communication module may be specifically a device that interacts with another electronic device, for example, a radio frequency circuit, a Bluetooth chip, or a Wi-Fi chip.

In an embodiment, when the processing module is a processor, and the storage module is a memory, the electronic device in this embodiment may be a device having a structure shown in FIG. 1.

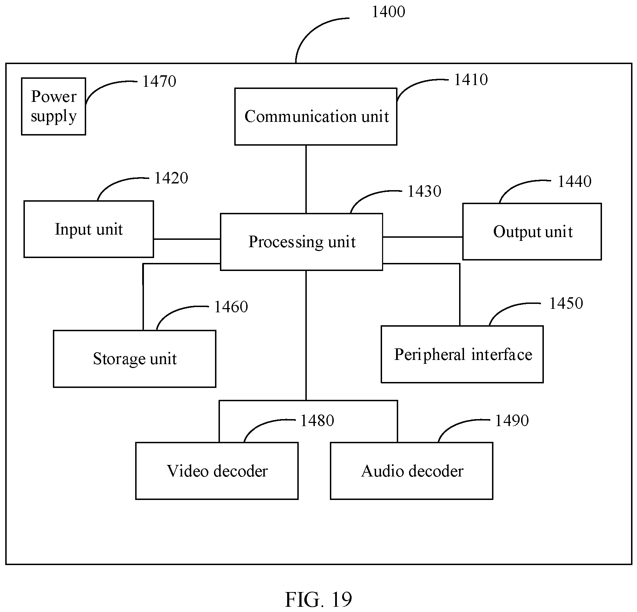

FIG. 19 is another possible composition diagram of an electronic device 1400 in the foregoing embodiments. As shown in FIG. 19, the electronic device 1400 may include a communication unit 1410, an input unit 1420, a processing unit 1430, an output unit (or may also be referred to as a display unit) 1440, a peripheral interface 1450, and a storage unit 1460, a power supply 1470, a video decoder 1480, and an audio decoder 1490.

The communication unit 1410 is configured to establish a communication channel, so that the electronic device 1400 connects to a remote server through the communication channel, and downloads media data from the remote server. The communication unit 1410 may include communication modules such as a WLAN module, a Bluetooth module, an NFC module, and a baseband module, and a radio frequency (Radio Frequency, RF) circuit corresponding to the communication module, and is configured to perform wireless local area network communication, Bluetooth communication, NFC communication, infrared communication, and/or cellular communication system communication, for example, wideband code division multiple access (wideband code division multiple access, W-CDMA) and/or high speed downlink packet access (high speed downlink packet access, HSDPA). The communication module 1410 is configured to control communication between components in the electronic device, and may support direct memory access.

The input unit 1420 may be configured to implement interaction between a user and the electronic device and/or input information into the electronic device. In a specific implementation of this application, the input unit may be a touch panel, or may be another humancomputer interaction interface, for example, a substantive input key or a microphone, or may be another apparatus for capturing external information, for example, a camera.

The processing unit 1430 is a control center of the electronic device, and may be connected to all parts of the entire electronic device through various interfaces and lines. The processing unit 1430 runs or executes a software program and/or a module stored in the storage unit, and invokes data stored in the storage unit, to perform various functions of the electronic device and/or process data. The foregoing steps S1810, S1820, and the like may be implemented by using the processing unit 1430.

The output unit 1440 includes but is not limited to an image output unit and a sound output unit. The image output unit is configured to output a text, an image, and/or a video. In a specific implementation of this application, a touch panel used by the input unit 1420 may also be used as a display panel of the output unit 1440. For example, after detecting a gesture operation of touching or approaching on the touch panel, the touch panel transmits the gesture operation to the processing unit to determine a type of a touch event, and then the processing unit provides a corresponding visual output on the display panel based on the type of the touch event. Although in FIG. 19, the input unit 1420 and the output unit 1440 are used as two independent parts to implement input and output functions of the electronic device, in some embodiments, the touch panel and the display panel may be integrated to implement the input and output functions of the electronic device. For example, the image output unit may display various graphical user interfaces as virtual control components, including but not limited to a window, a scroll bar, an icon, and a clipboard, so that a user performs an operation in a touch manner.

The storage unit 1460 may be configured to store a software program and a module. The processing unit executes various function applications of the electronic device and implements data processing by running the software program and the module stored in the storage unit.

This embodiment further provides a computer storage medium. The computer storage medium stores computer instructions, and when the computer instructions are run on an electronic device, the electronic device is enabled to perform the related method steps, to implement the methods in the foregoing embodiments.

This embodiment further provides a computer program product. When the computer program product runs on a computer, the computer is enabled to perform the foregoing related steps, to implement the methods in the foregoing embodiments.

In addition, an embodiment of this application further provides an apparatus. The apparatus may be specifically a chip, a component, or a module. The apparatus may include a processor and a memory that are connected. The memory is configured to store computerexecutable instructions. When the apparatus runs, the processor may execute the computerexecutable instructions stored in the memory, to enable the chip to perform the methods in the foregoing method embodiments.

The electronic device, the computer storage medium, the computer program product, or the chip provided in this embodiment is configured to perform the corresponding method provided above. Therefore, for beneficial effect that can be achieved, refer to beneficial effect of the corresponding method provided above. Details are not described herein.

Based on the foregoing descriptions of the implementations, a person skilled in the art may understand that for the purpose of convenient and brief description, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed system, apparatus, and method may be implemented in other manners. For example, the described apparatus embodiment is merely an example. For example, the module or division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed to different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, like a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An image obtaining method, wherein the method is applied to a first device, and the method comprises:
generating a thumbnail of an original image and a preview image of the original image based on information about the original image, wherein a size of the thumbnail is a first size, a size of the preview image is a second size, the first size is less than the second size, and the thumbnail and the preview image are stored in a same module;
when an application requests to access a target image of the original image, generating the target image based on a relationship between a target size of the target image and the first size and/or the second size; and
displaying the target image.

2. The method according to claim 1, wherein the generating the target image based on a relationship between a target size of the target image and the first size and/or the second size comprises:
if the target size is less than or equal to the first size, zooming out the thumbnail to the target size to obtain the target image;
if the target size is greater than the first size and less than the second size, zooming out the preview image to the target size to obtain the target image; or
if the target size is greater than or equal to the second size, zooming in the preview image to the target size to obtain the target image.

3. The method according to claim 1 or 2, wherein pixels of the thumbnail are a part of pixels of the preview image, and the method further comprises:
encoding information about the pixels of the thumbnail, and storing encoded information in a first byte range; and
encoding information about a pixel other than the pixels of the thumbnail in the preview image, and storing encoded information in a second byte range, wherein a first byte of the second byte range is adjacent to a last byte of the first byte range.

4. The method according to any one of claims 1 to 3, wherein the method further comprises:
determining whether the original image is an image to be accessed by a user; and
the generating a thumbnail of an original image and a preview image of the original image based on information about the original image comprises:
generating the thumbnail of the original image and the preview image of the original image based on the information about the original image when it is determined that the original image is the image to be accessed by the user.

5. The method according to claim 4, wherein the generating the thumbnail of the original image and the preview image of the original image based on the information about the original image when it is determined that the original image is the image to be accessed by the user comprises:
when it is determined that the original image is the image to be accessed by the user, obtaining a generation request based on a request message, and generating the thumbnail of the original image and the preview image of the original image based on the generation request and the information about the original image; or
when it is determined that the original image is the image to be accessed by the user, and it is checked, based on a preset period, that a generation request exists in a request list, generating the thumbnail of the original image and the preview image of the original image based on the generation request and the information about the original image.

6. The method according to any one of claims 1 to 5, wherein the method further comprises:
determining whether the first device is in an idle state; and
the generating a thumbnail of an original image and a preview image of the original image based on information about the original image comprises:
generating the thumbnail of the original image and the preview image of the original image based on the information about the original image when it is determined that the first device is in the idle state.

7. The method according to any one of claims 1 to 6, wherein the method further comprises:
when the first device browses a first media file in a second device and the first device does not have a thumbnail corresponding to the first media file, synchronizing the thumbnail corresponding to the first media file to the first device, wherein the thumbnail corresponding to the first media file comprises an image of a current page displayed by the second device when the first device browses the second device, images of N1 pages before the current page, and images of N2 pages after the current page; and N1 and N2 are integers greater than or equal to 1.

8. The method according to any one of claims 1 to 7, wherein the method further comprises:
when the first device browses a second media file in the second device and the first device does not have a preview image corresponding to the second media file, synchronizing the preview image corresponding to the second media file to the first device, wherein the preview image corresponding to the second media file comprises an image of a current page displayed by the second device when the first device browses the second device, images of N3 pages before the current page, and images of N4 pages after the current page; and N3 and N4 are integers greater than or equal to 1.

9. The method according to claim 7 or 8, wherein the method further comprises:
determining, based on a predicted user gesture, a third media file that is in the second device and that is to be accessed by the user; and
pre-synchronizing a thumbnail of the third media file or a preview image of the third media file.

10. The method according to claim 9, wherein the determining, based on a predicted user gesture, a third media file that is in the second device and that is to be accessed by the user comprises:
if the predicted user gesture is sliding upward, determining that the third media file comprises images of M1 pages after an image of a current page displayed by the second electronic device;
if the predicted user gesture is sliding downward, determining that the third media file comprises images of M2 pages before the image of the current page displayed by the second electronic device;
if the predicted user gesture is sliding leftward, determining that the third media file comprises images of M3 pages after the image of the current page displayed by the second electronic device; or
if the predicted user gesture is sliding rightward, determining that the third media file comprises images of M4 pages before the image of the current page displayed by the second electronic device, wherein M1, M2, M3, and M4 are integers greater than or equal to 1.

11. The method according to any one of claims 1 to 10, wherein the method further comprises:
determining whether the first device is in the idle state; and
when it is determined that the first device is in the idle state, and a quantity of local preview images in the first device is greater than a first threshold, clearing the local preview images, wherein the local preview image is a preview image generated by the first device based on the information about the original image stored in the first device.

12. The method according to claim 10, wherein the clearing the local preview images comprises:
sorting the local preview images based on time of accessing the local preview images by the user, and clearing the quantity of local preview images to a first specified value based on a sorting result; or
sorting the local preview images based on a quantity of times of accessing the local preview images by the user, and clearing the quantity of local preview images to the first specified value based on a sorting result.

13. The method according to claim 12, wherein the method further comprises:
clearing a distributed preview image in the first device, wherein the distributed preview image is a preview image obtained by the first device from the second device, or a preview image generated by the first device based on an original image read from the second device.

14. The method according to claim 13, wherein the clearing a distributed preview image in the first device comprises:
determining a value of duration in which the second device is disconnected from the first device and a value of preset duration, wherein the disconnection duration is disconnection duration between two adjacent connections between the second device and the first device; and
if the disconnection duration is greater than the preset duration, clearing all distributed preview images in the first device; or
if the disconnection duration is less than or equal to the preset duration, and a quantity of distributed preview images is greater than a second threshold, clearing a part of the distributed preview images in the first device.

15. The method according to claim 13 or 14, wherein the clearing a part of the distributed preview images in the first device comprises:
sorting the distributed preview images based on time of accessing the distributed preview images by the user, and clearing the quantity of distributed preview images to a second specified value based on a sorting result; or
sorting the distributed preview images based on a quantity of times of accessing the distributed preview images by the user, and clearing the quantity of distributed preview images to the second specified value based on a sorting result.

16. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the method according to any one of claims 1 to 15.

17. A computer storage medium, comprising computer instructions, wherein when the computer instructions are run on an electronic device, the electronic device is enabled to perform the method according to any one of claims 1 to 15.
